# EUROPEAN PATENT APPLICATION

(11) **EP 4 726 397 A1**
(43) Date of publication of application: **15.04.2026**
(21) Application number: 24817473.2
(22) Date of filing: 15.04.2024
(51) Int. Cl.: G01N 35/02

(54) **LID OPENING AND CLOSING DEVICE, CONTAINER STORAGE DEVICE AND AUTOMATIC ANALYSIS DEVICE, AND LID OPENING AND CLOSING DEVICE METHOD**

(30) Priority: 09.06.2023 JP 2023095516
(71) Applicant: HITACHI HIGH-TECH CORPORATION, Tokyo 105-6409 (JP)
(72) Inventor: MURAMATSU Yoshiki, Tokyo 105-6409 (JP); YAMASHITA Taichiro, Tokyo 105-6409 (JP); OKUSA Takenori, Tokyo 105-6409 (JP)
(74) Representative: MERH-IP Matias Erny Reichl Hoffmann Patentanwälte PartG mbB
(86) International application number: PCT/JP2024/014943
(87) International publication number: WO 2024/252789

(57) **Abstract**

Provided are a lid opening and closing device capable of reliably opening and closing a lid body provided on an upper surface of a container case storing a specimen container therein, a container storage device, an automatic analyzer, and a lid opening and closing method. An opening and closing portion that opens and closes a lid body 9 of a container case 8 includes: an opening and closing arm 24 having a hook portion 26 implemented to be accessible to the lid body 9. The lid body 9 has, on an upper surface thereof, a groove capable of receiving the hook portion 26 of the opening and closing arm 24 and having a hook receiving portion 69 forming a path through which the hook portion 26 is movable. A relationship between a first position of the hook portion 26 at which the hook receiving portion 69 receives the hook portion 26 in a state in which the lid body 9 is closed and a second position of the hook portion 26 when the hook portion 26 is engaged with the hook receiving portion 69 to open the lid body 9 is such that the second position is higher than the first position in a vertical direction and positions in the vertical direction with respect to a horizontal plane of an opening portion are different.

## Description

### Technical Field

The present invention relates to a lid opening and closing device and a lid opening and closing method for a case for storing a container in a container storage device suitable for an automatic analyzer for analyzing a biological sample such as blood or urine, and particularly to a lid opening and closing device, a container storage device, an automatic analyzer, and a lid opening and closing method for a case in which a container for accommodating a standard sample or a quality control sample is individually placed.

### Background Art

PTL 1 discloses a lid opening and closing device including a reagent storage that holds a reagent container containing a reagent, and a lid opening and closing member configured to be movable in a first direction parallel to a vertical direction and a second direction perpendicular to the first direction, in which the lid opening and closing member integrally includes a first member that opens a lid of the reagent container and a second member that closes the lid, is configured to be movable between a first position that is a position above the reagent container and a second position that is a position descended in the first direction from the first position until a bottom surface of the lid opening and closing member comes into contact with the reagent container, is configured to be movable between a second position and a third position that is a position moved in the second direction from the second position, opens the lid by the first member when moving from the second position to the third position, and closes the lid by the second member when moving from the third position to the second position.

### Citation List

### Patent Literature

PTL 1: JP2020-046377A

### Summary of Invention

### Technical Problem

An automatic analyzer is a device that automatically analyzes blood and other biological samples and outputs results and is an essential device in hospitals and medical test facilities. In such an automatic analyzer, it is required to perform more various tests in a shorter time.

The automatic analyzer requires quality control using a standard sample and a quality control sample when necessary, such as when the automatic analyzer is started up each morning or when new reagents are added, which places a burden on an operator.

Therefore, there is a demand for an automatic analyzer that can achieve quality control without the operator to add the standard sample or the quality control sample each time. Such an automatic analyzer requires a storage for storing the standard sample and the quality control sample. The standard sample and the quality control sample may be collectively referred to as a QC specimen or a QC specimen sample.

There are many types of such QC specimen samples since the QC specimen samples differ for each analysis item. Therefore, it is desirable for the storage to store, for example, 100 or more specimens.

Here, in order to prevent deterioration in a QC specimen, contamination with foreign matter, changes in concentration due to evaporation, and the like, it is desirable to perform storage in a cooled state at the time of storage.

Further, there is a configuration in which, in order to prevent evaporation of a container stored in a storage device, the container is stored in a case provided with an openable and closable lid, the lid is closed to prevent evaporation of a liquid inside the container during storage, and when dispensing the liquid, the lid of the case is opened by a lid opening and closing device, and for example, a dispensing nozzle accesses the inside of the container. An example of such a technique is disclosed in PTL 1.

In the configuration disclosed in PTL 1, when the lid starts to be opened and when the closing is completed, a tip portion of the lid pivoting around a support shaft moves substantially in an up and down direction, whereas a movement direction of the lid opening and closing member when the lid of the reagent container is opened and closed is a horizontal direction.

Therefore, the lid is opened and closed via a sloped surface acting as a so-called cam in order to convert the movement direction and a force direction. That is, since a force for opening and closing the lid is only a component force acting on the sloped surface in a moving force in the horizontal direction, it is necessary to apply a larger force in the horizontal direction to the lid opening and closing member than the force required for opening and closing the lid. In other words, since only a portion of the force in the horizontal direction applied to the lid opening and closing member is used for opening and closing the lid, a sufficient force for opening and closing the lid may not be obtained.

Although the moving force in the horizontal direction by the lid opening and closing member itself does not contribute to an opening and closing operation of the lid, the moving force is also applied to the container via the lid, so that there is a problem that rigidity to withstand the force in the horizontal direction is required for the support shaft of the container or the lid.

An object of the invention is to provide a lid opening and closing device, a container storage device, an automatic analyzer, and a lid opening and closing method capable of reliably opening and closing a lid body provided on an upper surface of a container case for storing a specimen container therein.

### Solution to Problem

According to an aspect of the invention, there is provided a lid opening and closing device including: an opening and closing portion configured to open and close a lid body of a case having an accommodating portion that accommodates a container that accommodates a liquid and an openable and closable lid body that is attached to an upper surface of the accommodating portion via a hinge. The opening and closing portion includes a lever having a convex portion configured to be accessible to the lid body, the lid body has, on an upper surface thereof, a groove capable of receiving the convex portion of the lever and having a concave portion forming a path through which the convex portion is movable, and a relationship between a first position of the convex portion at which the concave portion receives the convex portion in a state in which the lid body is closed and a second position of the convex portion when the convex portion is engaged with the concave portion to open the lid body is such that the second position is higher than the first position in a vertical direction and positions in the vertical direction with respect to a horizontal plane of an opening portion are different.

According to another aspect of the present disclosure, there is provided a lid opening and closing device including: an opening and closing portion configured to open and close a lid body of a case having an accommodating portion that accommodates a container that accommodates a liquid and an openable and closable lid body that is attached to an upper surface of the accommodating portion via a hinge; and a control unit configured to control an operation of the opening and closing portion. The opening and closing portion includes a lever having a convex portion configured to be accessible to the lid body, the lid body has, on an upper surface thereof, a groove capable of receiving the convex portion of the lever and having a concave portion forming a path through which the convex portion is movable, and the control unit controls the operation of the opening and closing portion to cause the convex portion to access the concave portion, horizontally move the convex portion along the path toward the hinge to engage with the concave portion, and move the lever upward to open the lid body in the engaged state.

### Advantageous Effects of Invention

According to the invention, it is possible to reliably open and close a lid body provided on an upper surface of a container case that stores a specimen container therein. Problems, configurations, and effects other than those described above will be clarified by the following description of embodiments.

### Brief Description of Drawings

[FIG. 1] FIG. 1 shows a schematic plan view of an automatic analyzer according to a first embodiment.
[FIG. 2] FIG. 2 is a plan view of (a) a container case and (b) a holder of a container storage device according to the first embodiment.
[FIG. 3] FIG. 3 shows a cross-sectional view taken along a line A-A in FIG. 2.
[FIG. 4] FIG. 4 shows a perspective view of a configuration of a lid opening and closing device according to the first embodiment as viewed from a rear upper side.
[FIG. 5] FIG. 5 shows a cross-sectional view of the lid opening and closing device and a container storage according to the first embodiment taken along a line C-C.
[FIG. 6] FIG. 6 shows a cross-sectional view of the lid opening and closing device and the container storage according to the first embodiment taken along a line D-D.
[FIG. 7] FIG. 7 shows a top view of the lid opening and closing device according to the first embodiment.
[FIG. 8] FIG. 8 shows cross-sectional views of the lid opening and closing device according to the first embodiment taken along a line E-E.
[FIG. 9] FIG. 9 shows a three-side view showing a configuration of the container case and a lid body in the container storage device according to the first embodiment.
[FIG. 10] FIG. 10 shows a cross-sectional view showing the configuration of the container case and an opening operation of the lid body in the container storage device according to the first embodiment taken along a line F-F.
[FIG. 11] FIG. 11 shows perspective views showing the opening operation of the lid body performed by the lid opening and closing device according to the first embodiment.
[FIG. 12] FIG. 12 shows longitudinal cross-sectional views showing the opening operation of the lid body performed by the lid opening and closing device according to the first embodiment.
[FIG. 13] FIG. 13 shows longitudinal cross-sectional views showing the opening operation of the lid body performed by the lid opening and closing device according to the first embodiment.
[FIG. 14] FIG. 14 shows longitudinal cross-sectional views showing the opening operation of the lid body performed by the lid opening and closing device according to the first embodiment.
[FIG. 15] FIG. 15 shows longitudinal cross-sectional views showing a closing operation of the lid body performed by the lid opening and closing device according to the first embodiment.
[FIG. 16] FIG. 16 shows longitudinal cross-sectional views showing an initialization operation of the lid body performed by the lid opening and closing device according to the first embodiment.
[FIG. 17] FIG. 17 shows longitudinal cross-sectional views showing the initialization operation of the lid body performed by the lid opening and closing device according to the first embodiment.
[FIG. 18] FIG. 18 shows longitudinal cross-sectional views showing the initialization operation of the lid body performed by the lid opening and closing device according to the first embodiment.
[FIG. 19] FIG. 19 shows a longitudinal cross-sectional view showing the initialization operation of the lid body performed by the lid opening and closing device according to the first embodiment.
[FIG. 20] FIG. 20 shows a cross-sectional view of the lid opening and closing device according to the first embodiment when an abnormal descending state is detected, which is taken along a line D-D.
[FIG. 21] FIG. 21 is a flowchart showing a lid body opening operation performed by the lid opening and closing device according to the first embodiment.
[FIG. 22] FIG. 22 is a flowchart showing a lid body closing operation performed by the lid opening and closing device according to the first embodiment.
[FIG. 23] FIG. 23 is a flowchart showing a lid body initialization operation performed by the lid opening and closing device according to the first embodiment.
[FIG. 24] FIG. 24 shows perspective views of (a) a single reagent bottle, and (b) a reagent bottle pack including three reagent bottles, which is another embodiment including a lid body that is opened and closed by the lid opening and closing device according to the invention.
[FIG. 25] FIG. 25 shows a cross-section view taken along a line H-H in FIG. 27, showing a configuration of a lid opening and closing device and a container storage according to a second embodiment.
[FIG. 26] FIG. 26 shows a cross-sectional view taken along a line G-G in FIG. 25.
[FIG. 27] FIG. 27 shows a plan view of the lid opening and closing device and the container storage according to the second embodiment.
[FIG. 28] FIG. 28 shows cross-sectional views of a configuration of a lid opening and closing device and a container storage according to a third embodiment, corresponding to cross-sectional views taken along the line C-C.
[FIG. 29] FIG. 29 shows cross-sectional views of the configuration of the lid opening and closing device and the container storage according to the third embodiment taken along the line C-C.
[FIG. 30] FIG. 30 shows diagrams showing various modifications of a hook portion provided in a lid opening and closing device according to a fourth embodiment.

### Description of Embodiments

Hereinafter, embodiments of a lid opening and closing device, a container storage device, an automatic analyzer, and a lid opening and closing method according to the invention will be described with reference to the drawings. In the drawings used in the present description, the same or corresponding components are denoted by the same or similar reference signs, and repeated descriptions of these components may be omitted.

### <First Embodiment>

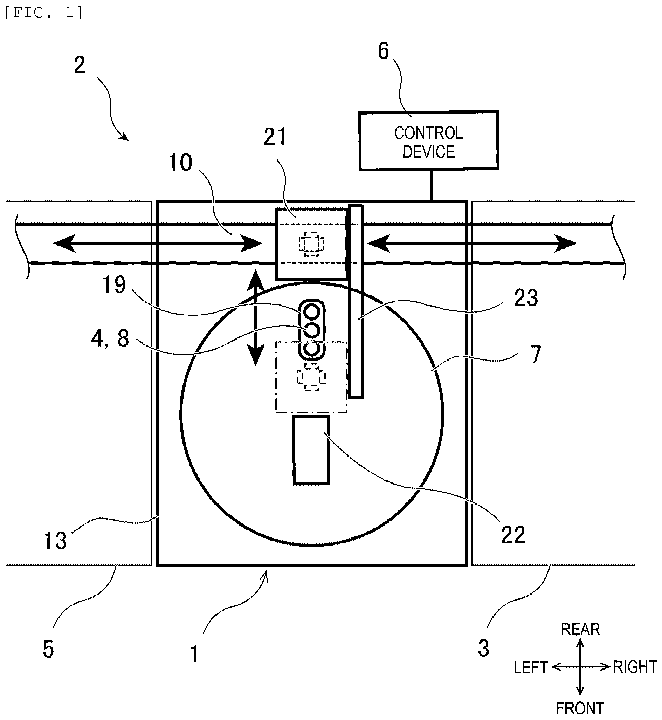

A first embodiment of a lid opening and closing device, a container storage device, an automatic analyzer, and a lid opening and closing method according to the invention will be described with reference to FIGS. 1 to 24.

First, an overall configuration of an automatic analyzer including a container storage device 1 will be described with reference to FIG. 1. FIG. 1 is a schematic plan view of the automatic analyzer.

An automatic analyzer 2 according to the invention shown in FIG. 1 includes a container storage device 1 that stores a QC specimen container 4 to be used for measurement in an analyzer 3, the analyzer 3 that is a device for measuring a physical property of a specimen and needs to ensure analysis accuracy by a QC specimen, and a pretreatment device 5 that performs various pretreatments on a specimen prior to analysis on the specimen in the analyzer 3 or a post-treatment device that performs various post-treatments on the specimen after the analysis on the specimen.

A control device 6 includes, for example, a control computer, a drive circuit of each drive motor, a control circuit of a barcode reader, a storage device of a read barcode, a signal detection circuit by various sensors, a control circuit of a cooling device, and a display circuit of a monitor, and controls various operations of each mechanism and each portion in the container storage device 1 starting by an opening and closing portion.

One or more of the analyzer 3, the pretreatment device 5, the post-treatment device, and the container storage device 1 that constitute the automatic analyzer 2 can be omitted as appropriate, can be changed as appropriate according to a system configuration, are connected to each other by a first conveyance path 10, and can move and transfer a specimen container, a rack on which the specimen container is placed, and the like.

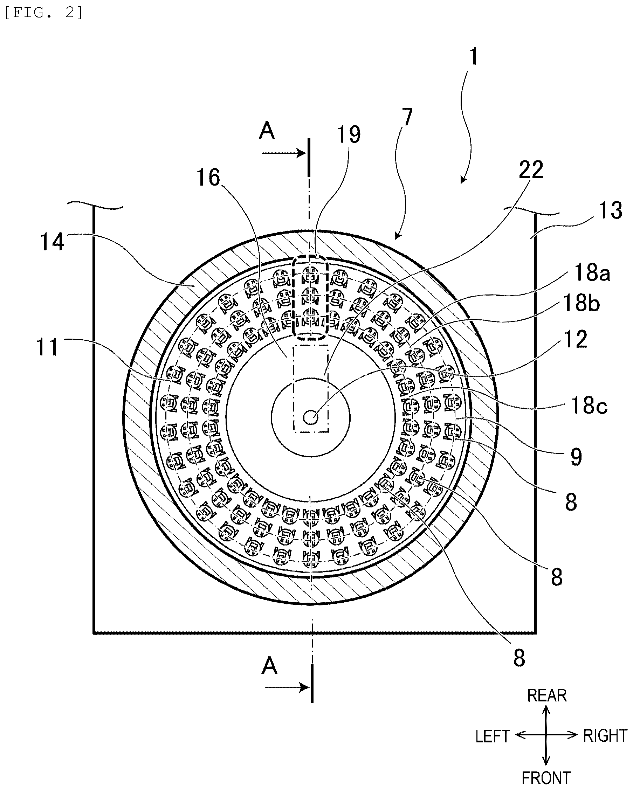

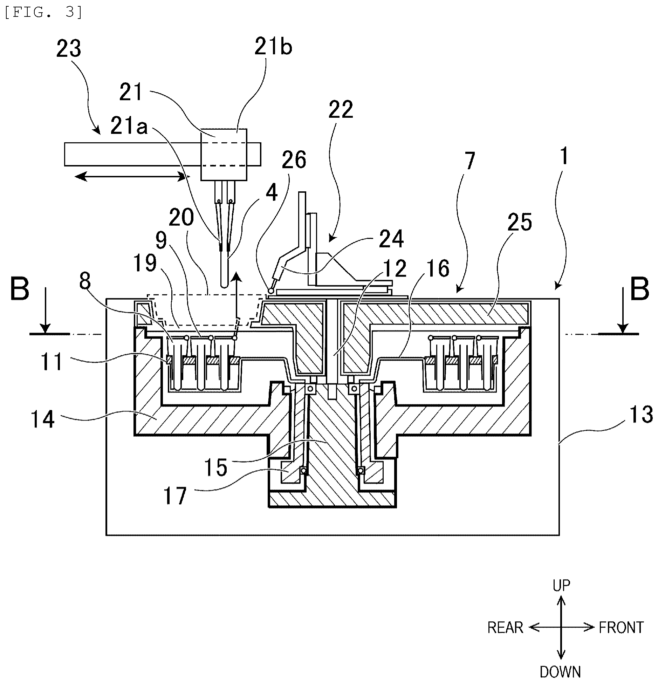

Next, a configuration of the container storage device 1 according to the present embodiment will be described with reference to FIGS. 2 and 3, and FIG. 1 as appropriate. FIG. 2 is a schematic plan view of the container storage device and is a cross-sectional view taken along a line B-B in FIG. 3. FIG. 3 is a cross-sectional view taken along a line A-A in FIG. 2.

In the present embodiment, an example is shown in which a holder is a circular ring holder 11 in which container cases are arranged in three concentric circles and container cases 8 are concentrically arranged in the circular ring holder 11 with respect to a storage center shaft 12. However, the holder is not limited to a circular ring shape, and may have any shape of a disk shape or a fan shape, and is not limited to these shapes. The container cases 8 do not need to be concentrically held in the holder, and may be arranged in another manner. A container may be referred to as a specimen container or a QC specimen container.

In the following description, up, down, left, right, front, and rear directions are based on up, down, left, right, front, and rear directions shown in FIGS. 1 to 3. In the present embodiment, a front and rear direction is a radial direction of a container storage 7 along an A-A direction, and is a direction orthogonal to the first conveyance path 10. The left and right direction is a direction parallel to the first conveyance path 10 orthogonal to the A-A direction.

To describe a schematic configuration of the container storage device 1 according to the present embodiment with reference to FIGS. 2 and 3, the container storage device 1 includes a substantially rectangular parallelepiped housing 13, and the substantially cylindrical container storage 7 is provided inside the housing 13.

A configuration example of the container storage 7 will be described with reference to FIGS. 2 and 3.

The container storage 7 is provided in a cylindrical shape around the storage center shaft 12 facing the vertical direction, and is provided close to the inside of the first conveyance path 10 and a pair of left and right second side surfaces.

In order to maintain the inside of the container storage 7 at a low temperature, for example, 10°C or lower, a cylindrical surface, an upper surface, and a lower surface of an outer periphery of the container storage 7 are covered with a heat insulating member 14 having a low thermal conductivity, and the container storage 7 is cooled by a cooling device (omitted for convenience of illustration) using, for example, low-temperature air.

Inside the container storage 7, there is provided a disk-shaped disk 16 rotatably supported around a disk support shaft 15 provided coaxially with the storage center shaft 12. The disk 16 is connected via a disk drive shaft 17 to a drive motor (not shown), such as a stepping motor, to be rotatable via a timing belt, and can be stopped at a predetermined angular position by an angle detection sensor (not shown).

A plurality of container cases 8 are arranged on the disk 16 concentrically and radially about central shaft of the container storage 7, and the QC specimen container 4 is stored in each of the container cases 8. In the present embodiment, the container cases 8 are arranged along three concentric circles, that is, along an outer circumference circle 18a, an intermediate circumference circle 18b, and an inner circumference circle 18c.

A shutter opening 19 is provided on a rear radius of a drum upper lid 25 constituting an upper surface of the container storage 7.

In the present embodiment, the shutter opening 19 has a substantially rectangular shape, one of the pair of sides constitutes the front and rear direction, and the other side is shorter than the one of the pair of sides and is orthogonal to the one of the pair of sides.

In the present embodiment, a length of one side of the set described above is set such that the container cases 8 located on the outer circumference circle 18a and the inner circumference circle 18c of the container cases 8 arranged in a triple concentric shape are exposed in a plan view, and a length of the other side is set such that one of the container cases 8 is exposed in a plan view, and has an opening dimension such that the QC specimen container 4 can be placed in the container case 8 or taken out from the container case 8 by a container gripping device 21 to be described later. Hereinafter, one side of the shutter opening 19 may be referred to as a long side, and the other side may be referred to as a short side.

The shutter opening 19 is provided with a shutter 20 that is opened and closed by a shutter opening and closing mechanism (not shown). In addition, in order to prevent outside air from entering the cooled container storage 7 when the shutter 20 is closed, an airtight sealing material (not shown) is provided about the shutter 20, sealing a space between the shutter opening 19 of the container storage 7 and the shutter 20.

The disk 16 is rotated and stopped at a position where the central shaft of the QC specimen container 4 stored in the predetermined container case 8 provided in the container storage 7 coincides with the shutter opening 19, so that the predetermined QC specimen container 4 can be disposed within the range of the shutter opening 19.

A lid opening and closing device 22 is provided adjacent to the shutter opening 19 on the same radius in a direction approaching the storage center shaft 12 of the container storage 7. The lid opening and closing device 22 can open and close the lid body 9 by acting on the lid body 9 provided on the upper surface of the container case 8 stored in the container storage 7 via the shutter opening 19 in an open state.

The container gripping device 21 (gripper) includes, at its lower end, an opening and closing claw capable of gripping and releasing the QC specimen container 4 held in the container case 8, and is supported by a second conveyance path 23 to be movable in the front and rear direction and the up and down direction. When the lid body 9 is opened, the container gripping device 21 can take out the QC specimen container 4 from the container storage 7 and move it to the first conveyance path 10, where the QC specimen container can be placed on a container rack (not shown) or the like on the first conveyance path 10.

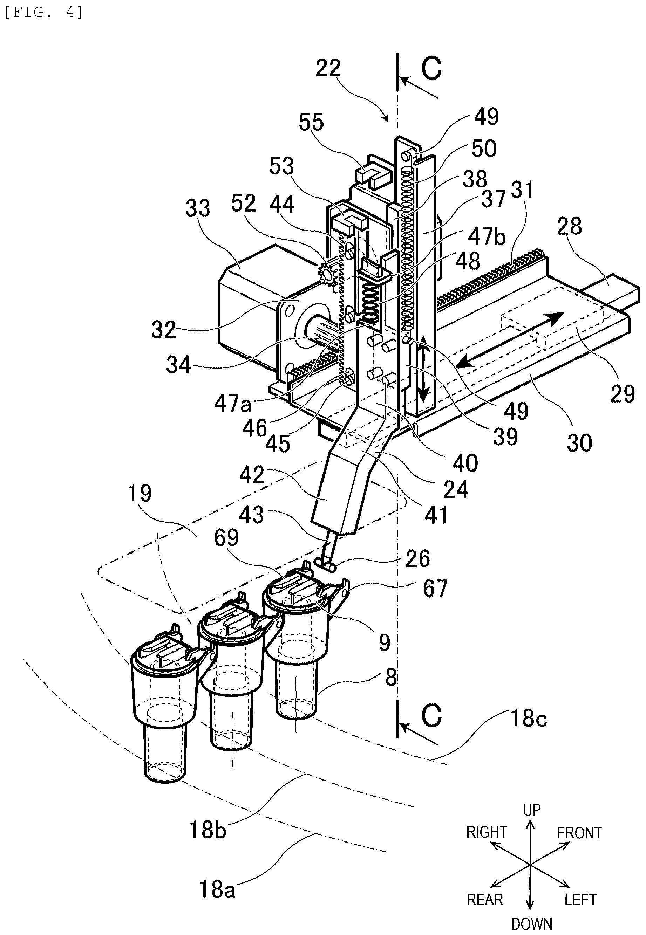

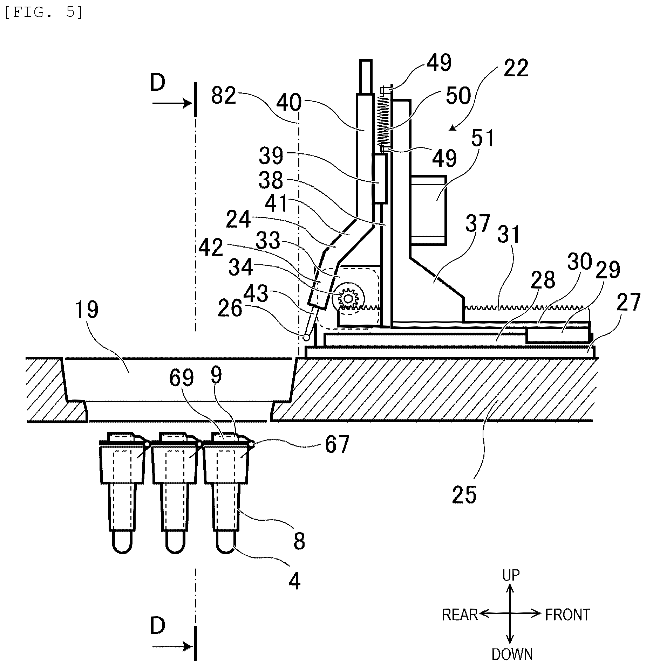

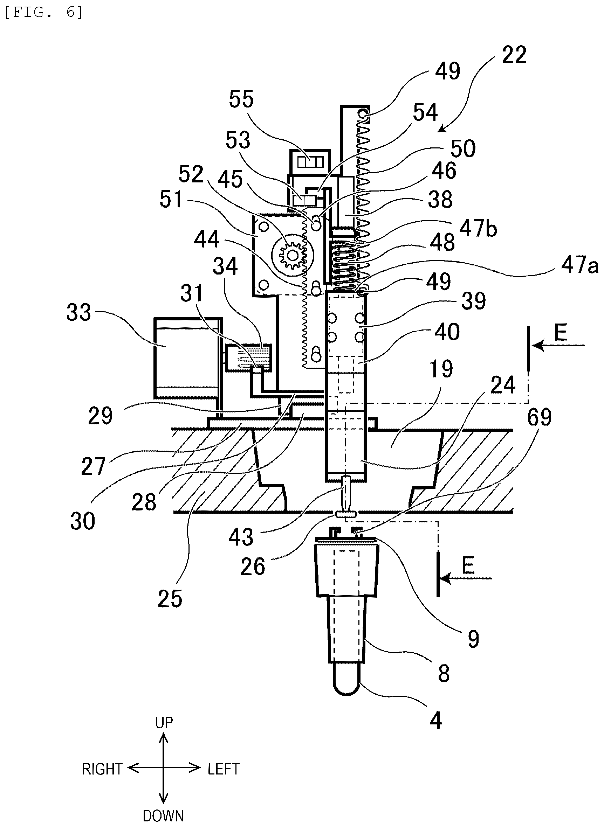

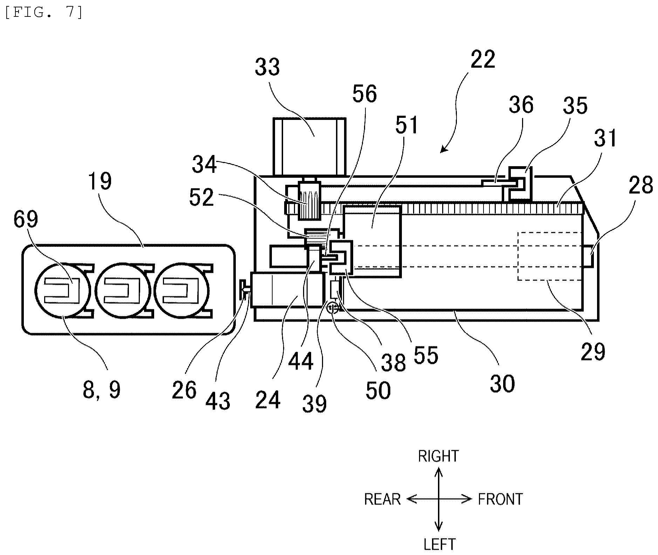

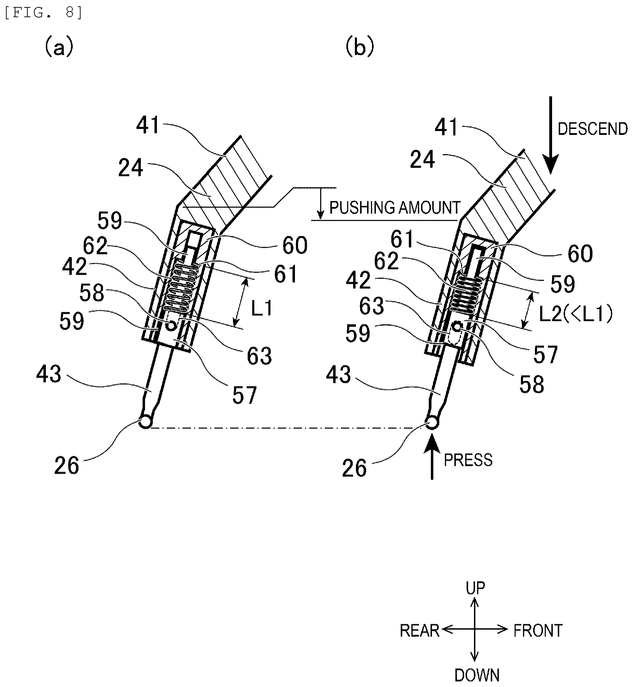

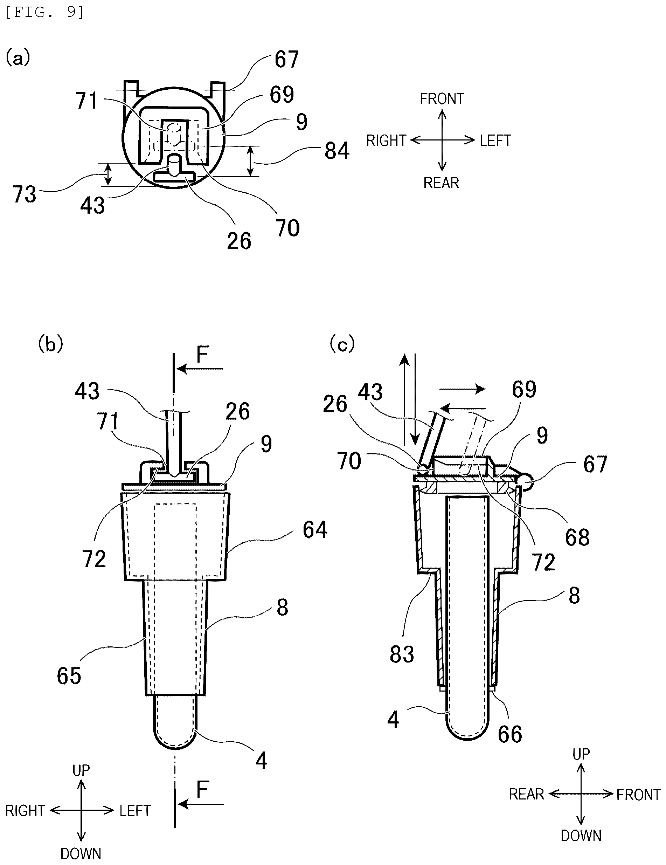

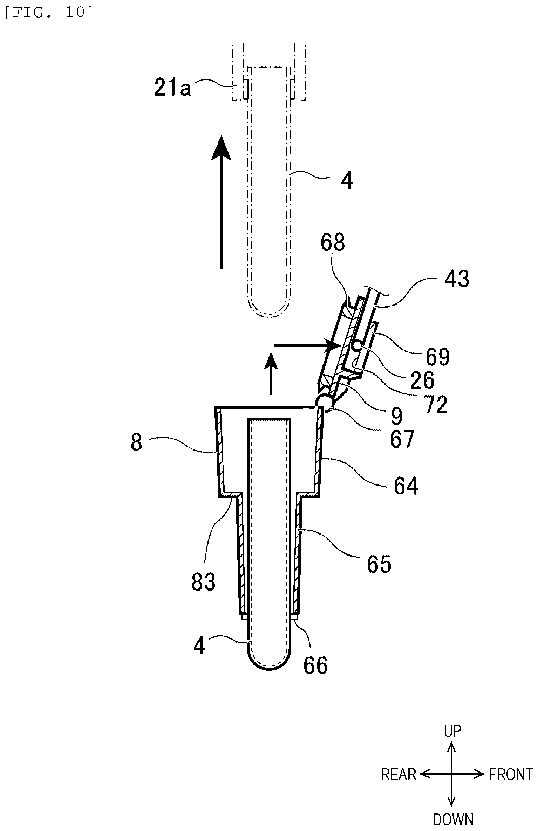

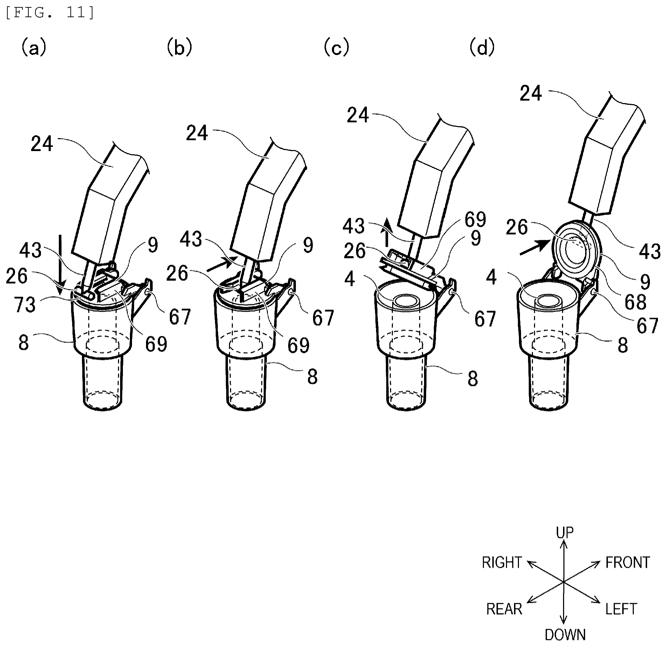

Next, the configuration and operation of the lid opening and closing device 22 will be described with reference to FIGS. 4 to 11. FIG. 4 is a perspective view showing the configuration of the container case 8 provided with the lid opening and closing device 22 and the lid body 9 as viewed from a rear upper side, FIG. 5 is a C-C cross-sectional view of the lid opening and closing device 22 and the container storage 7, FIG. 6 is a D-D cross-sectional view of the lid opening and closing device 22 and the container storage 7, and FIG. 7 is a top view of the lid opening and closing device 22. FIG. 8 is an E-E cross-sectional view showing a configuration of a lower end of the opening and closing arm 24 of the lid opening and closing device 22, and FIG. 9 shows three diagrams showing the configuration of the container case 8 including the lid body 9 and an action of a hook portion 26 for opening and closing the lid body 9, where (a) of FIG. 9 is a top view, (b) of FIG. 9 is a rear view, and (c) of FIG. 9 is an F-F cross-sectional view. FIG. 10 is an F-F cross-sectional view showing a state in which the lid body 9 is fully opened by the action of the hook portion 26, and further showing a state in which the QC specimen container 4 is taken out from the container case 8 by the action of the container gripping device (gripper) 21. FIG. 11 is a perspective view of an operation of opening the lid body 9 from a closed state by the action of the hook portion 26 of the lid opening and closing device 22 as viewed from the rear upper side.

The lid opening and closing device 22 includes an X slider 29 that fixes an X rail 28 extending in the front and rear direction (X direction) to a highly rigid base 27 made of a metal plate such as aluminum provided on an upper surface of a drum upper lid 25 and is supported to be slidable in the front and rear direction with respect to the X rail 28. A slide base 30 is fixed to the X slider 29, and an X rack 31 extending in the front and rear direction is provided on the slide base 30.

An X motor 33 is fixed to the base 27 via a mounting bracket 32, and an X pinion 34 is provided on a drive shaft for taking out an output of the X motor 33, so that the X motor 33 rotates together with the drive shaft. The X pinion 34 meshes with the X rack 31, and when the X motor 33 is driven to rotate by applying electric power, the X pinion 34 rotates to move the X rack 31 in the front and rear direction, and the slide base 30 and the X slider 29 move in the front and rear direction along the X rail 28.

The base 27 is provided with an X origin sensor 35, which is, for example, a transmission type light detection sensor, for detecting an origin that is a reference position in the front and rear direction (X direction). A portion of the X rack 31 is an X origin detection plate 36 extending forward, and the origin can be detected by shielding transmitted light of the X origin sensor 35. Detailed conditions of the origin will be described separately.

An angle 37 having a substantially L shape in a side view is fixed to the slide base 30, and a Z rail 38 extending in the up and down direction is fixed to the angle 37, and a Z slider 39 supported to be slidable in the up and down direction with respect to the Z rail 38 is provided. The opening and closing arm 24 is fixed to the Z slider 39.

The opening and closing arm 24 includes a fixing portion 40 with respect to the Z slider 39 having a substantially rectangular cross section extending in the up and down direction, a bending portion 41 that is bent and inclined in a direction separated from the Z slider 39 toward the rear at a lower portion of the fixing portion 40, and a lower end portion 42 that is inclined more gently than the bending portion 41 at a lower portion of the bending portion 41 but is inclined in a direction separated from the Z slider 39 toward the rear.

Further, a columnar support rod portion 43 extending in the longitudinal direction of the opening and closing arm 24 by extending in the same direction as the lower end portion 42 is provided at the lower end of the lower end portion 42 of the opening and closing arm 24. A lower end of the support rod portion 43 is provided with a columnar hook portion 26 that is orthogonal to an extending direction (longitudinal direction) of the support rod portion 43 and is enlarged symmetrically in the left and right direction (transverse direction of the support rod portion 43). Both the support rod portion 43 and the hook portion 26 are implemented to have a substantially inverted T shape.

The support rod portion 43 is inclined at a predetermined angle in a fully open direction of the lid body 9 with respect to a perpendicular line of the upper surface of the lid body 9. Specifically, since an inclination angle of the lower end portion 42 of the support rod portion 43 is substantially equal to a fully opening angle of the lid body 9 as described later, as an example, it is desirable that the lower end portion 42 of the support rod portion 43 is inclined by about 15° from the vertical direction so that the lid body 9 can be opened by about 105°.

The hook portion 26 has a function of opening and closing the lid body 9 in the container storage 7, and details thereof will be separately described. The hook portion 26 may be referred to as a convex portion of an opening and closing mechanism.

A Z rack 44 is provided in the up and down direction along the fixing portion 40 of the opening and closing arm 24. The Z rack 44 is supported in a state of being movable by a predetermined amount, for example, about 3 mm in the up and down direction via a slide pin 45 provided in the fixing portion 40 of the opening and closing arm 24 and a pin receiving hole 46 which is an elongated hole in the up and down direction provided in the Z rack 44. A plurality of pairs of the slide pin 45 and the pin receiving hole 46 may be provided in the up and down direction along the Z rack 44.

A portion of the fixing portion 40 of the opening and closing arm 24 is formed as a spring seat 47a, and a compression spring 48, which is an abnormal descent detection spring, is sandwiched between the spring seat 47a and a spring seat 47b provided in a portion of the Z rack 44 to bias the Z rack 44 upward with a predetermined force.

A Z motor 51 is fixed to the angle 37, and a Z pinion 52 is provided on a drive shaft for taking out an output of the Z motor 51, and rotates together with the drive shaft. The Z pinion 52 meshes with the Z rack 44, and when the Z motor 51 is rotationally driven by applying electric power, the Z pinion 52 rotates to move the Z rack 44 in the up and down direction, and the opening and closing arm 24 and the Z slider 39 move in the up and down direction along the Z rail 38.

An example of the X motor 33 and the Z motor 51 is a so-called stepping motor, and a rotation angle and a rotation direction can be controlled by the number of steps applied to the motor and a driving pattern. As a result, a movement amount in the horizontal direction and a movement amount in the up and down direction can be controlled to predetermined amounts.

In the vicinity of an upper end of the angle 37 and at a position immediately below the opening and closing arm 24, spring hooking portions 49, 49 are provided, and a tension spring 50 is stretched in the up and down direction. The tension spring 50 supports part of the weight of the components that move up and down, including the opening and closing arm 24, and has an effect of reducing a drive load torque of the Z motor 51.

An abnormal descent detection sensor 53, which is, for example, a transmission type light detection sensor, is provided integrally with the opening and closing arm 24 in the vicinity of the upper portion of the Z rack 44. A part of the vicinity of the upper end of the Z rack 44 constitutes an abnormal descent detection plate 54 extending in a thin plate shape toward the right, and presence or absence of the abnormal descent can be detected by shielding the transmitted light of the abnormal descent detection sensor 53. Details will be described separately.

The angle 37 is provided with, for example, a Z origin sensor 55 (origin height detection sensor) which is a transmission type light detection sensor, and a part of the Z rack 44 constitutes an origin height detection plate 56 extending in a thin plate shape toward the front, so that a height of an origin can be detected by shielding transmitted light of the Z origin sensor 55. The Z origin sensor 55 may be referred to as a Z origin sensor.

The configuration of the support rod portion 43 and the hook portion 26 provided at the lower end of the opening and closing arm 24 will be described with reference to FIG. 8. (a) of FIG. 8 is a cross-sectional view taken along line E-E showing a state in which the support rod portion 43 is extended, and (b) of FIG. 8 is a cross-sectional view showing a state in which the opening and closing arm 24 is descended to contract the support rod portion 43 and a predetermined pressing force is applied to the hook portion 26.

An upper portion of the cylindrical support rod portion 43 above the lower end portion of the opening and closing arm 24 is a cylindrical support rod base 57 having a diameter larger than that of the support rod portion 43, and a thin pin 58 orthogonal to the support rod portion 43 is provided to penetrate the support rod base 57 and protrude from a cylindrical surface of the support rod base 57. A cylindrical guide portion 59 having a diameter smaller than that of the support rod base 57 is provided above the support rod base 57. The support rod portion 43, the support rod base 57, the pin 58, and the guide portion 59 are integrally movable.

A guide member 60 having good slidability is provided between the opening and closing arm 24 and the support rod base 57 or the guide portion 59, and is fitted into the opening and closing arm 24. A lower portion of the guide member 60 is formed into a large-diameter cylinder hole having a slight gap from the support rod base 57, an upper end portion of the guide member 60 is formed into a large-diameter cylinder hole having a slight gap from the guide portion 59, and the support rod portion 43 is axially supported by the support rod base 57 and the guide portion 59 to be slidable in the axis direction of the support rod portion 43.

A stepped portion 61 is provided between the cylinder hole corresponding to the support rod base 57 and the cylinder hole corresponding to the guide portion 59. Between the stepped portion 61 and an upper surface of the support rod base 57, there is provided a pressing spring 62 serving as a compression spring having an outer diameter smaller than that of the support rod base 57 and an inner diameter larger than that of the guide portion 59, and is implemented to press the support rod portion 43 or the hook portion 26 with a predetermined force in the axis direction of the support rod portion 43, which is approximately downward.

An example of a material of the guide member 60 may be a POM (polyacetal) resin.

In a state in which the opening and closing arm 24 is raised and the hook portion 26 is not in contact with anything as shown in (a) of FIG. 8, a length of the pressing spring 62 is L1, and when the hook portion 26 presses the lid body from above to close the lid body as shown in (b) of FIG. 8, the pressing spring 62 contracts to L2 (< L1) according to a pressing amount applied, thereby applying a predetermined pressure to the hook portion 26.

An elongated hole 63 having a major axis in the axis direction of the support rod portion 43 is provided in a portion of the guide member 60 corresponding to the pin 58, and an operation range of the pin 58 can be limited to a range of the major axis of the elongated hole 63 to define a sliding movement amount of the support rod portion 43. Accordingly, the support rod portion 43 is supported to be movable within a predetermined range in the longitudinal direction thereof via the pressing spring 62.

It is preferable that a biasing force of the pressing spring 62 is set to be smaller than a biasing force of the compression spring 48 which is an abnormal descent detection spring so that the abnormal descent detection does not act when the lid body 9 is closed as a normal operation.

The configuration of the container case 8 and the opening operation of the lid body 9 will be described with reference to FIGS. 9 and 10.

The container case 8 has a substantially stepped cylindrical shape having an opening on an upper surface thereof, an upper portion is a first cylindrical portion 64 having a large diameter, and a lower portion is a second cylindrical portion 65 concentric with the first cylindrical portion 64 and having a diameter less than that of the first cylindrical portion 64. A stepped portion 83 is formed between the first cylindrical portion 64 and the second cylindrical portion 65, and is placed on the circular ring holder 11 at the stepped portion 83.

A sealing member 66 in a circular ring shape is provided on a case bottom surface, which is a lowermost surface of the second cylindrical portion 65, and maintains airtightness with an outer peripheral cylindrical surface of the QC specimen container 4 when the QC specimen container 4 is inserted as shown in (c) of FIG. 9.

A lid body support shaft 67 is provided at an outer edge of an opening portion of the upper surface of the container case 8, and the lid body 9 that opens and closes the opening is pivotally supported around the lid body support shaft 67 to be openable and closable. When the lid body 9 is closed, the disk-shaped sealing material 68 provided on a lower surface of the lid body 9 comes into contact with the inside of the opening of the container case 8 to seal the inside of the container case 8.

A hook receiving portion 69 for opening and closing the lid body 9 by the action of the hook portion 26 is provided on the upper surface of the lid body 9.

As shown in (a) of FIG. 9, the hook receiving portion 69 has a substantially U-shape in a plan view, and has a shape in which a hook receiving portion end surface 70 on a rear surface is opened.

As shown in (b) of FIG. 9, in a rear view, the hook receiving portion end surface 70 is formed with an inverted T-shaped groove by the hook receiving portion 69 and a groove 71 in the front and rear direction provided on the upper surface of the hook receiving portion 69, and has a shape in which the inverted T-shaped support rod portion 43 of the opening and closing arm 24 and the hook portion 26 can be inserted or removed. The groove shape of the hook receiving portion 69 is symmetrical on both sides of the support rod portion 43.

In the present example, the control device 6 causes the hook portion 26 to access the hook receiving portion 69, horizontally moves the hook portion 26 along a path toward the lid body support shaft 67 to engage the hook portion 26 with the hook receiving portion 69, and in an engaged state, controls the operation of the opening and closing portion to move the opening and closing arm 24 upward to open the lid body 9.

For example, the support rod portion 43 is horizontally moved by a movement amount 84 and inserted into the groove 71 in the front and rear direction provided on the upper surface of the hook receiving portion 69, and the hook portion 26 is inserted between the upper surface of the lid body 9 and a lid groove upper surface 72 parallel to the upper surface of the lid body. When the support rod portion 43 is pressed downward, the lid body 9 is closed, and when the support rod portion is raised in a state in which the hook portion 26 is positioned below the lid groove upper surface 72, the lid body 9 is opened.

On the upper surface of the lid body 9, a region 73 between a rear surface side circumferential portion and the hook receiving portion end surface 70 can, when the lid body 9 is closed, allow the support rod portion 43 and the hook portion 26 to descend from immediately above and abut against the upper surface of the lid body 9, and if the hook portion 26 continues to move horizontally forward, that is, in a direction approaching the lid body support shaft 67, the hook portion 26 is inserted into the groove of the hook receiving portion 69. The position of the hook portion 26 at this time may be referred to as a "first position".

The region 73 is also a region in which, when the support rod portion 43 is raised while the lid body 9 is closed, the hook portion 26 is separated from the upper surface of the lid body 9 and the action of the support rod portion 43 and the hook portion 26 on the lid body 9 can be released. The region 73 may be referred to as an access position.

Further, when the opening and closing arm 24 descends within the range of the region 73, as described with reference to FIG. 8, the pressing spring 62 is compressed and a predetermined closing force is applied to the lid body 9. Accordingly, the hook portion 26 closes the lid body 9 by a biasing force generated by deforming the pressing spring 62 when the lid body 9 is pressed from above and closed. Since the region 73 has a maximum distance from the lid body support shaft 67, a moment around the lid body support shaft 67 is maximized, and reliable closing performance can be secured.

A portion of the lid body 9 farthest from the lid body support shaft 67 may be referred to as a tip of the lid body 9. The tip of the lid body 9 is adjacent to the region 73.

FIG. 10 is a cross-sectional view showing a state in which a container is gripped by gripping claws 21a of the container gripping device 21 and taken out upward with the lid body 9 in the full open state.

As described above, when the hook portion 26 is horizontally moved in a direction approaching the lid body support shaft 67 from the state in which the hook portion 26 is in contact with the upper surface of the lid body 9 in the region 73, the hook portion 26 is inserted into the hook receiving portion 69, and thus, when the hook portion 26 is raised, the lid body 9 is opened to, for example, about 30° to 45° according to a lifting amount.

Subsequently, when the hook portion 26 is horizontally moved in the direction of the lid body support shaft 67, the lid body 9 can be opened to an angle parallel to the support rod portion 43 at the maximum. For example, if a lower end side of the support rod portion 43 is inclined 15° rearward from the vertical, the lid body 9 can be opened up to 105°. At this time, the hook portion 26 moves to an opposite side of the container case 8, straddling immediately above the lid body support shaft 67, before the lid body 9 reaches a fully opening angle. The position of the hook portion 26 at this time may be referred to as a "second position".

As for a positional relationship between the "second position" of the hook portion 26 when the hook portion 26 is engaged with the hook receiving portion 69 to open the lid body 9 and the "first position" of the hook portion 26 at which the hook receiving portion 69 receives the hook portion 26 in the state in which the lid body 9 is closed, the "second position" is above the "first position" in the vertical direction. The "second position" is located forward or rearward from the "first position", and the positions of the opening portions in the vertical direction with respect to the horizontal plane are different from each other.

Here, it is desirable that the sealing material 68 is convex on the lower surface of the lid body 9, the opening on the upper surface of the container case 8 is fully opened without being obstructed in a plan view, and the gripping claws 21a of the container gripping device 21 are reliably inserted between the first cylindrical portion 64 of the container case 8 and the QC specimen container 4. Therefore, it is effective to set the full opening angle of the lid body 9 to be larger than 90°, and it is preferable to incline the support rod portion 43 and the lower end portion 42 of the opening and closing arm 24 along the direction in which the lid body 9 is fully opened.

A series of operations for opening the lid body 9 will be described with reference to FIG. 11. First, (a) the opening and closing arm 24 moves horizontally and descends in the vertical direction so that the hook portion 26 comes into contact with the upper surface of the lid body 9 in the region 73. Next, (b) the opening and closing arm 24 is horizontally moved in a direction approaching the lid body support shaft 67. The hook portion 26 is inserted into the hook receiving portion 69. Thereafter, (c) the opening and closing arm 24 is raised. The lid body 9 is opened via the hook receiving portion 69 by raising the hook portion 26. Finally, (d) the opening and closing arm 24 is horizontally moved in the direction of the lid body support shaft 67 (the direction in which the hook portion 26 and the hook receiving portion 69 are engaged with each other) to fully open the lid body 9. By the above operation, the lid body can be changed from a closed state to the full open state.

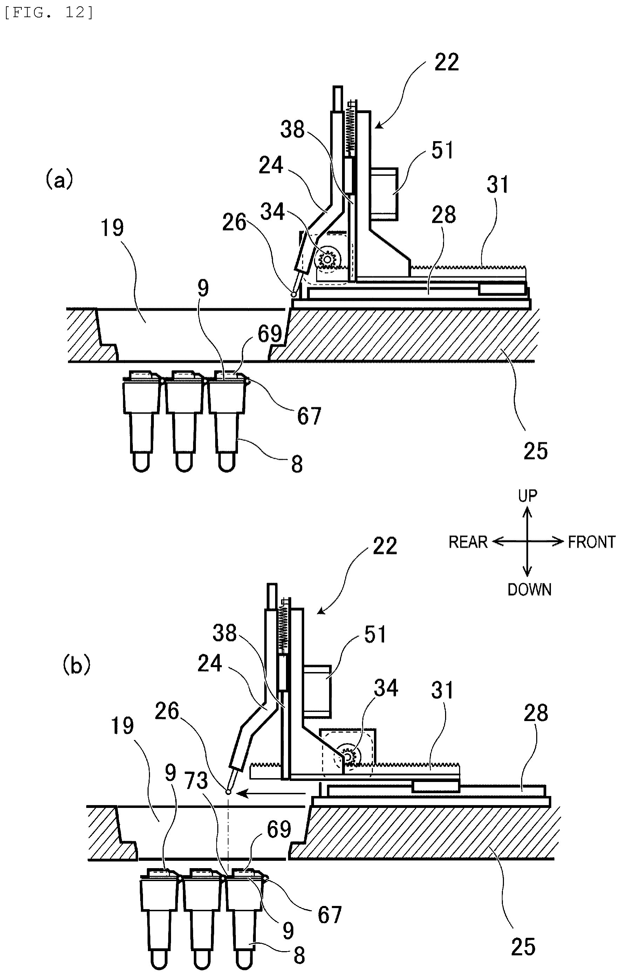

Next, an opening operation and a closing operation of the lid body 9 by the lid opening and closing device 22 will be described with reference to FIGS. 12 to 19.

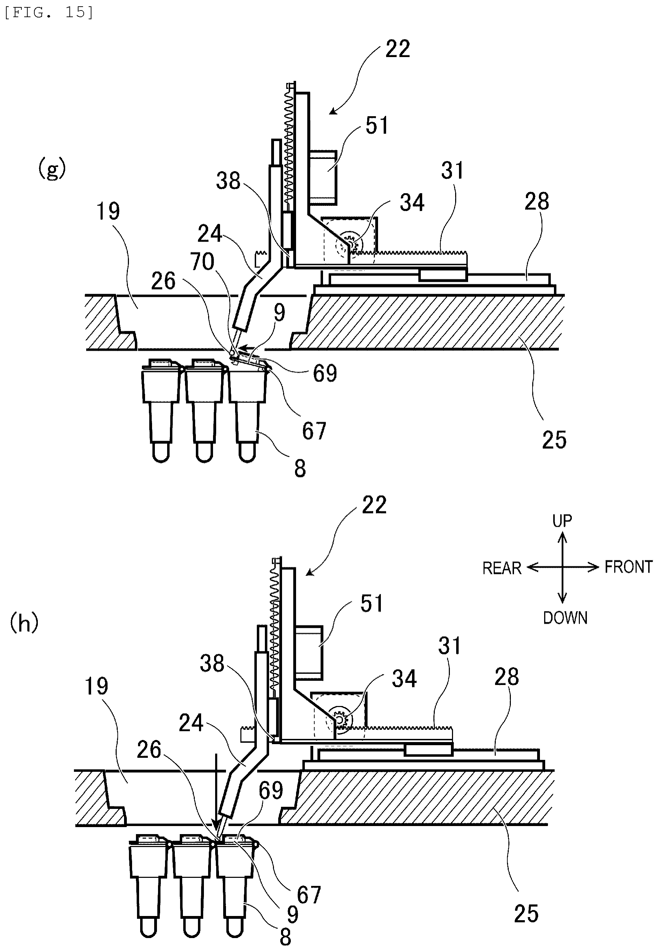

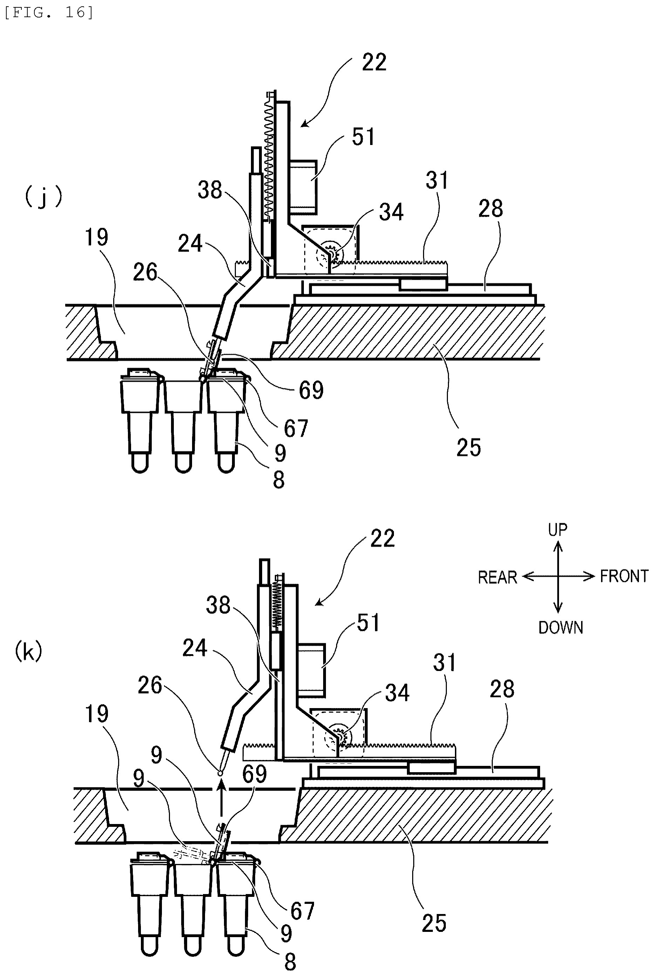

FIGS. 12 to 14 are diagrams showing an operation in which the lid opening and closing device 22 moves from an original position and the lid body is changed from the closed state to the full open state by a series of operations. FIG. 15 is a diagram showing the operation of closing the lid body by the action of the lid opening and closing device 22. FIGS. 16 to 19 are diagrams showing an operation of closing all the lid bodies and returning the lid bodies to the original position from a state in which an open and closed state of the lid bodies is unstable during a return operation after a power failure or an emergency stop.

A representative portion representing the operation of the lid opening and closing device 22 is the hook portion 26 that opens and closes the lid body 9, and a position and a movement of the hook portion 26 indicate an operation state of the entire lid opening and closing device 22.

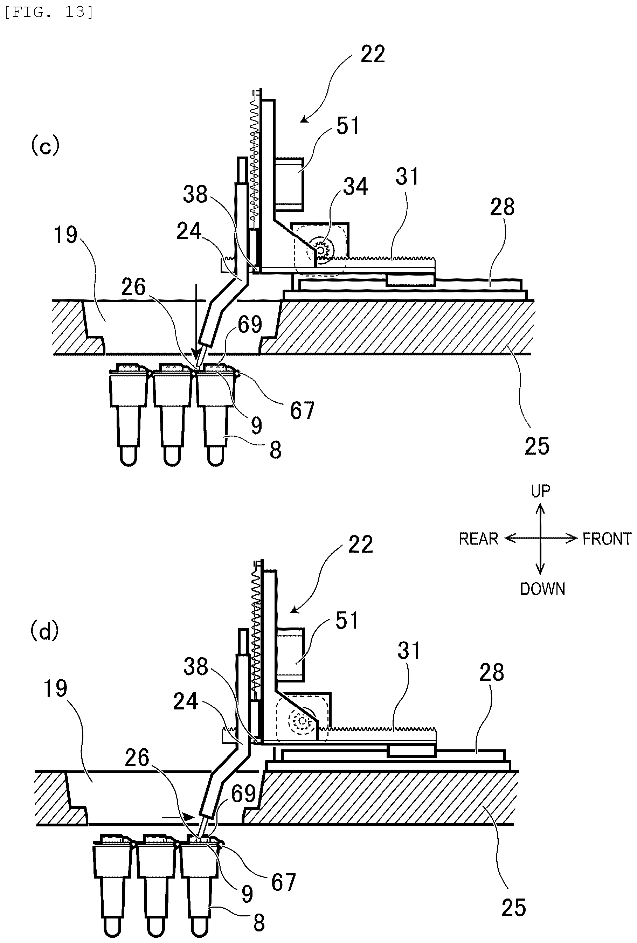

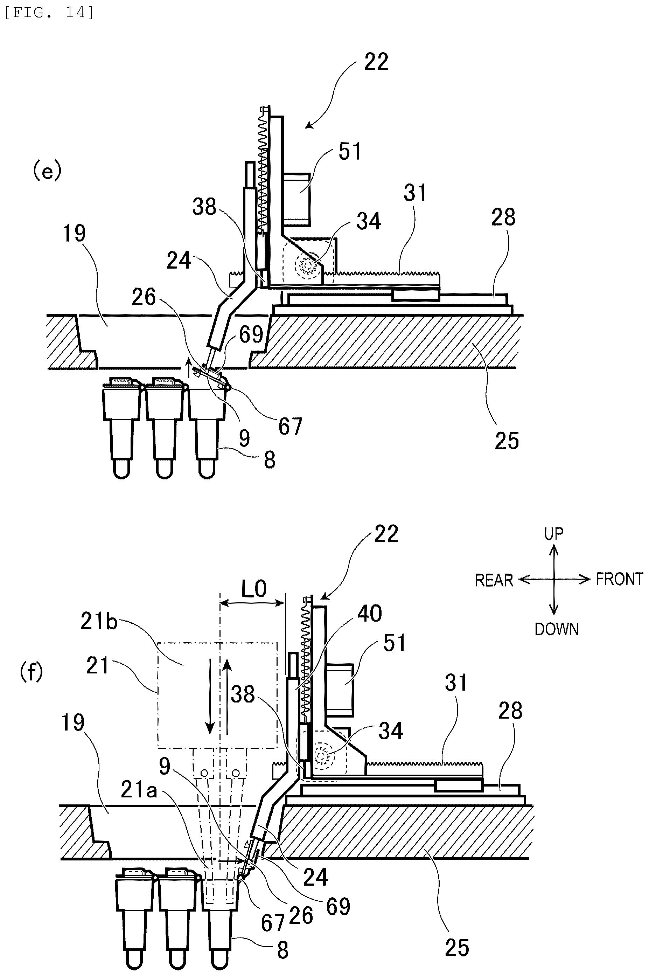

(a) of FIG. 12 shows the original position of the lid opening and closing device 22, (b) of FIG. 12 shows an intermediate state of the opening operation, (c) of FIG. 13 shows an intermediate state of the opening operation, (d) of FIG. 13 shows an opening start state of the lid body, (e) of FIG. 14 shows an intermediate state of the opening operation, and (f) of FIG. 14 shows the full open state.

With reference to FIGS. 12 to 14, an operation of opening the lid body 9 of the container case 8 located at a frontmost position will be described. Other container cases 8 are different only in the position in the front and rear direction or the movement amount, and the same operation can be performed.

In (a) of FIG. 12, the lid opening and closing device 22 is at the original position. The hook portion 26 is located outside the shutter opening 19, that is, on a side opposite to the shutter opening 19 with respect to a shutter opening end 82 which is a frontmost edge of the shutter opening 19 in FIG. 5, is located above the drum upper lid 25, and is located at a position where an opening and closing operation of the shutter 20 is not hindered. Both the X origin sensor 35 and the Z origin sensor 55 are in a light shielding state, and it can be confirmed that both the front and rear direction and the up and down direction are at the original positions.

In (b) of FIG. 12, by driving the X motor 33, the hook portion 26 horizontally moves backward to a position immediately above the region 73 on the container case 8 to be opened the lid body 9.

In (c) of FIG. 13, by driving the Z motor 51, the hook portion 26 descends until it comes into contact with the region 73 of the upper surface of the lid body 9. That is, the hook portion 26 is in the first position.

In (d) of FIG. 13, by driving the X motor 33, the hook portion 26 horizontally moves forward by a predetermined amount along the upper surface of the lid body 9. The hook portion 26 is inserted into the hook receiving portion 69.

In (e) of FIG. 14, by driving the Z motor 51, the hook portion 26 is raised by a predetermined amount, and the lid body 9 is opened by a certain amount according to the lifting amount of the hook portion 26. Here, when the hook portion 26 is excessively raised, the hook portion 26 is detached from the hook receiving portion 69, and thus the lifting amount of the hook portion 26 is required to be within a range in which a state in which the hook portion 26 is inserted into the hook receiving portion 69 is maintained.

In (f) of FIG. 14, by driving the X motor 33, the hook portion 26 moves forward, the opening angle of the lid body 9 increases with the movement, and the upper surface of the lid body 9 and the support rod portion 43 come into contact with each other at an angle at which the upper surface of the lid body 9 is parallel to the support rod portion 43, and thus the angle becomes the maximum opening angle of the lid body 9, and the full open state is achieved.

As described above, the maximum opening angle is determined to fully open the opening on the upper surface of the container case 8 without obstructing the opening in a plan view, and an opening angle of, for example, about 105° is preferable. That is, the hook portion 26 is in the second position. By setting the second position on the opposite side of the lid body support shaft 67 from the first position, the maximum opening angle of the lid body 9 is preferably increased.

By the series of operations described above, the opening operation of the lid body 9 by the lid opening and closing device 22 is performed.

In the lid opening and closing device 22, by matching an opening and closing direction of the lid body 9 with the radial direction of the cylindrical container storage 7, a horizontal operation required for the opening and closing operation of the lid body 9 and a selection operation of the inner and outer peripheral container cases of the container case 8 concentrically arranged in the container storage 7 can be performed in the same direction (X direction), so that the lid opening and closing device 22 as a whole can perform a series of operations only by biaxial driving in an X-axis direction and a Z-axis direction, and the configuration can be simplified.

As an example of another form, when the direction of opening and closing the lid and the direction of the selection operation of the inner and outer peripheral container cases are different, since the opening and closing operation of the lid body 9 and the selection operation of the inner and outer peripheral container cases 8 are different in direction, separate driving devices are required, and overall three-axis drive of XYZ is required.

In the full open state of the lid body 9, the QC specimen container 4 stored in the container case 8 is held and taken out by the container gripping device 21. The container gripping device 21 includes the gripping claws 21a at the lower end, and can take out the QC specimen container 4 from the container case 8 by descending to insert the gripping claws 21a into the container case 8 with the gripping claws 21a open, closing the gripping claws 21a to grip the QC specimen container 4, and raising the QC specimen container as it is.

Although the gripping claws 21a at the lower end of the container gripping device 21 have a thin diameter to be inserted into the container case 8, the upper portion of the container gripping device 21 is the gripping claw drive unit 21b, and has a configuration in which, for example, a motor and a cam are included, so that the container gripping device 21 is large.

It is desirable to provide a distance L0 between the fixing portion 40 of the opening and closing arm 24 and the central shaft of the fully opened container case 8 of the lid body 9 so that the gripping claw drive unit 21b and the opening and closing arm 24 do not interfere with each other even when the container gripping device 21 descends. As a form of the opening and closing arm for satisfying such a condition, it is effective to incline the lower end portion 42 by about 15° from the vertical so that the fully opening angle of the lid body 9 becomes about 105° as described above. Further, in order to avoid interference with the container gripping device 21 and the gripping claws 21a when the container gripping device 21 descends most, it is more preferable to incline the shutter opening 19 such that the side close to the lid opening and closing device 22 is wider toward the upper surface, or to provide a step in the middle.

Next, an operation of closing the lid body 9 in the full open state will be described with reference to FIG. 15. (g) of FIG. 15 shows an intermediate state of the closing operation, and (h) of FIG. 15 shows a fully closed state.

For the closing operation, in a state in which the hook portion 26 and the hook receiving portion 69 are engaged with each other, the control device 6 controls the operation of the opening and closing portion such that the opening and closing arm 24 is horizontally moved separated from the lid body support shaft 67, the opening and closing arm 24 is moved downward to press the upper surface of the lid body 9, and the lid body 9 is closed.

Specifically, in (g) of FIG. 15, the X motor 33 is driven to horizontally move the hook portion 26 rearward from the full open state shown in (f) of FIG. 14. The hook portion 26 moves rearward from the hook receiving portion end surface 70 of the hook receiving portion 69 and is positioned on the region 73 in the vicinity of the tip of the lid body 9. Since the hook portion 26 is separated from the hook receiving portion 69, the lid body 9 pivots in a closing direction around the lid body support shaft 67 by its own weight. Then, the sealing material 68 comes into contact with an inner periphery of the upper surface opening of the container case 8, resulting in a half-closed state.

Thereafter, in (h) of FIG. 15, the Z motor 51 is driven to descend the hook portion 26. By driving the Z motor 51 in a direction of further descending the lid body 9 by a predetermined amount after the lid body 9 is completely closed, as described with reference to FIG. 8, a closing force is applied to the region 73 of the tip portion of the lid body 9 by the action of the pressing spring 62 provided in the lower end portion 42 of the opening and closing arm 24, and the lid body 9 is reliably closed.

Thereafter, the Z motor 51 is driven to raise the hook portion 26, and when the Z origin sensor 55 is shielded, the origin height is reached. Thereafter, the X motor 33 is driven to horizontally move forward, and when the X origin sensor 35 is shielded, the original position is reached.

By the above operation, the closing operation of the lid body 9 is completed.

The closing operation of the lid body 9 is not limited to the operation described above, and the closing operation may be performed in a reverse order of the opening operation of the lid body 9 described with reference to (a) of FIG. 12 to (f) of FIG. 14, that is, the operation from (f) of FIG. 14 to (a) of FIG. 12.

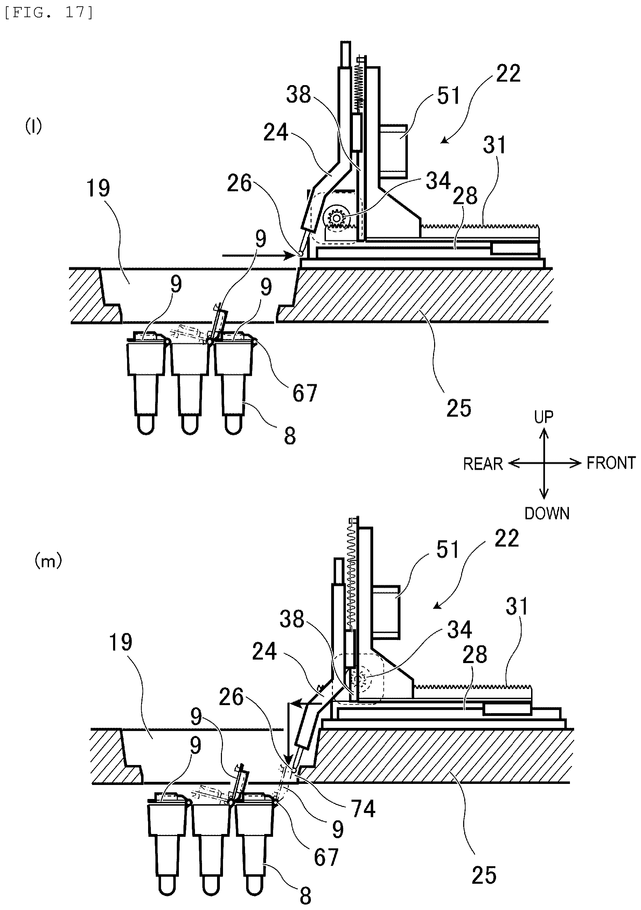

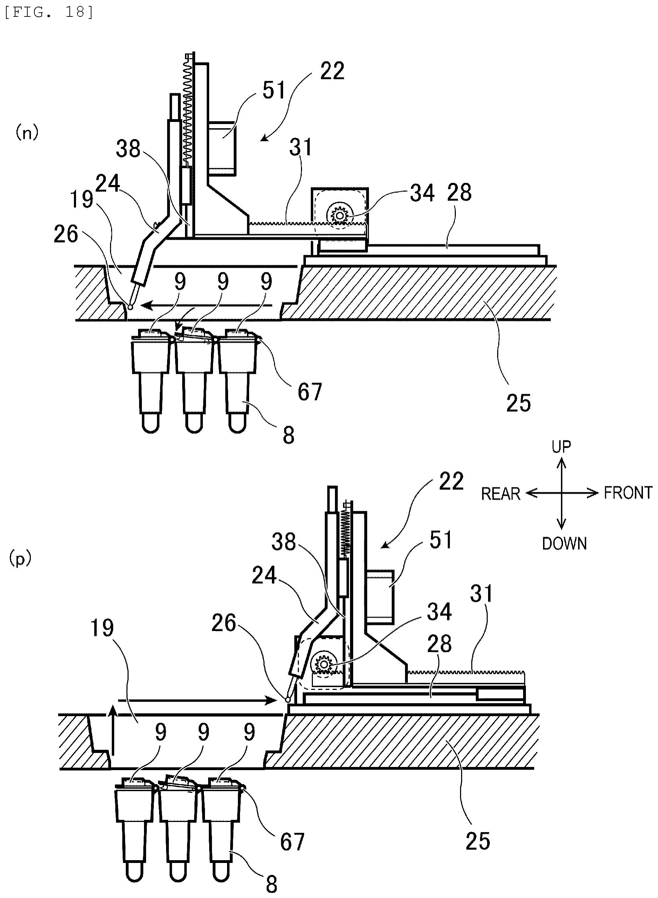

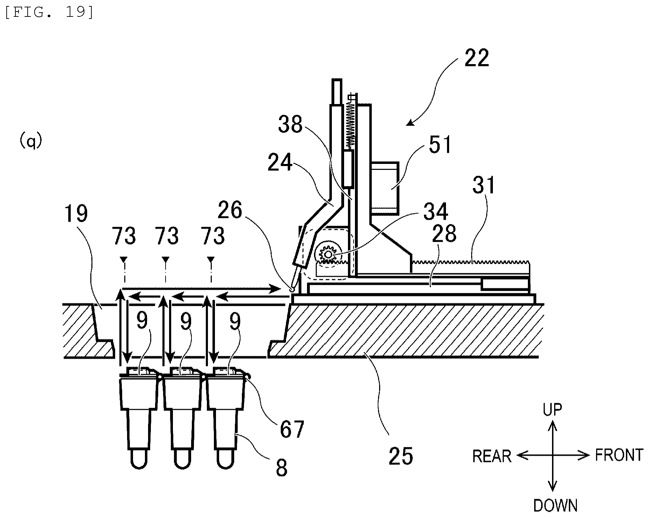

Next, an initialization operation will be described with reference to FIGS. 16 to 19. (j) of FIG. 16 shows a start state of the initialization operation, (k) of FIG. 16 shows an intermediate state of the initialization operation, (I) of FIG. 17 shows a state in which the initialization operation is temporarily returned to the origin during the initialization operation, (m) of FIG. 17 shows an intermediate state of the initialization operation, (n) of FIG. 18 shows a half-closed state of the lid body during the initialization operation, (p) of FIG. 18 shows an intermediate state of the initialization operation in which the initialization operation is temporarily returned to the origin, and (q) of FIG. 19 shows a completion state of the initialization operation.

The initialization operation is an operation of returning to the original position from a state in which the operation is stopped at a position other than the origin during a normal series of operations due to, for example, a power failure during the operation or an emergency stop operation by the operator. When the lid body 9 is moved from the original position at the start of the initialization operation and is in the intermediate state of the opening and closing operation of the lid body 9, any of the lid bodies 9 in the shutter opening 19 may be in a half-open state or the full open state, but the open and closed state of each lid body 9 cannot be determined by the origin detection.

On the other hand, when a power supply of a device is turned on again from a power failure or an emergency stop state to return the operation, all of the lid bodies 9 are required to be completely closed. This is because if the disk is rotated by restoring the power supply while the lid body 9 is in the half-open state or the full open state, the lid body 9 that is not closed may collide with the shutter opening 19 or rub against the drum upper lid 25, which may lead to damage to the container case 8 or the device.

That is, when returning to the origin from a position other than the origin, in the present embodiment, it is desirable to reliably close all of the three rows of the lid bodies 9 disposed in the shutter opening 19 and move to the original position after confirming the closing.

Therefore, the control device 6 controls the operation of the opening and closing portion to move the hook portion 26 to a third position that is closer to the opening and closing portion than the upper surface of the lid body 9 when the lid body 9 closest to the opening and closing portion among the plurality of lid bodies 9 is fully opened, horizontally move the hook portion 26 from the third position to immediately above the first position of the lid body 9 farthest from the opening and closing portion among the plurality of lid bodies 9, and sequentially press the plurality of lid bodies 9 from above to close all the lid bodies 9.

Specifically, (j) of FIG. 16 shows an example of a state at the time of starting the initialization operation, in which the central lid body 9 of the container cases 8 disposed in three rows is fully opened. Since the X origin sensor 35 and the Z origin sensor 55 are moved from the original position, both the X origin sensor 35 and the Z origin sensor 55 are in a light transmitting state.

(k) of FIG. 16 shows a state in which the position in the front and rear direction does not move as it is, the Z motor 51 is driven to raise the hook portion 26, and the Z origin sensor 55 changes from the light transmitting state to a light shielding state. The height of the hook portion 26 is the same as the original position.

At this time, since the hook portion 26 is separated from the hook receiving portion 69 of the lid body 9 and is located at a further raised position, the lid body 9 may be maintained at the fully open position, or the lid body 9 may be pivoted in the closing direction to be brought into a half-closed state in which the sealing material 68 abuts on the inner periphery of the upper surface opening of the container case 8 as indicated by a one-dot chain line in the drawing.

(l) of FIG. 16 shows a state in which the height in the Z direction does not move as it is, the X motor 33 is driven to horizontally move the hook portion 26, and the X origin sensor 35 changes from the light transmitting state to the light shielding state. In this state, both the X origin sensor 35 and the Z origin sensor 55 are shielded from light, and it can be confirmed that the hook portion 26 returns to the original position.

(m) of FIG. 17 shows a state in which the hook portion 26 is horizontally moved backward by a predetermined amount and descends downward by a predetermined amount. The position of the hook portion 26 shown in (m) of FIG. 17 is a region 74 for the initialization operation in which the height of the hook portion 26 is lower than the upper end of the fully opened lid body 9, and the position of the hook portion 26 in the front and rear direction is between the lid body 9 and a frontmost wall surface of the shutter opening 19 when the foremost lid body 9 is fully opened. This region 74 may be referred to as a "third position".

(n) of FIG. 18 shows a state in which the hook portion 26 located in the region 74 is horizontally moved rearward to the vicinity of the tip of the rearmost lid body 9. By moving the hook portion 26 horizontally from the region 74, even if any one of the three rows of lid bodies 9 is in the full open state, since the upper surface of each of the lid bodies 9 or the upper surface of the hook receiving portion 69 is pressed from the lid body support shaft 67 side by the hook portion 26, the lid body 9 pivots in the closing direction around the lid body support shaft 67 and is closed to a half-opened state by its own weight. In the example, the central lid body 9 of the three rows of container cases 8 is in the half-closed state, and the remaining two lid bodies 9 remain in the original fully closed state.

In (p) of FIG. 18, the Z motor 51 is driven from the state of (n) of FIG. 18 to raise the hook portion 26, and when the Z origin sensor 55 changes from the light transmitting state to the light shielding state, the height of the hook portion 26 is the same as the original position, and thus the raising is stopped, and subsequently, the X motor 33 is driven to horizontally move the hook portion 26 forward, and when the X origin sensor 35 changes from the light transmitting state to the light shielding state, and the origin is detected, and the raising is stopped. In the state of (p) of FIG. 16, both the X origin sensor 35 and the Z origin sensor 55 are shielded from light, and it can be confirmed that the hook portion 26 returns to the original position.

(q) of FIG. 19 shows an operation of closing all the three rows of the lid bodies 9. The hook portion 26 returned to the original position in the state of (p) of FIG. 18 is first horizontally moved to the region 73 in the vicinity of the tip of the foremost lid body 9 by driving the X motor 33, and after stopping, the Z motor 51 is driven to bring the hook portion 26 into contact with the upper surface of the lid body 9, and then the hook portion 26 descends by a predetermined amount until the lid body 9 is further pressed by the pressing spring 62 to close the lid body 9.

Next, the Z motor 51 is driven to temporarily raise the hook portion 26 to the height of the origin, then the X motor 33 is driven to horizontally move the hook portion 26 to the region 73 of the adjacent lid body 9, and the Z motor 51 is driven by a predetermined amount to descend the hook portion 26 and close the lid body 9.

After the Z motor 51 is driven again to raise the hook portion 26 to the height of the origin, the X motor 33 is driven to horizontally move to the region 73 of the adjacent lid body 9, and the Z motor 51 is driven by a predetermined amount to descend the hook portion 26 to close the lid body 9.

Further, the Z motor 51 is driven to raise the hook portion 26 to the height of the origin, and then the X motor 33 is driven to move the hook portion 26 forward to the origin.

With the operations up to this point, all of the three rows of the lid bodies 9 are closed and the hook portion 26 is returned to the origin, completing the initialization operation.

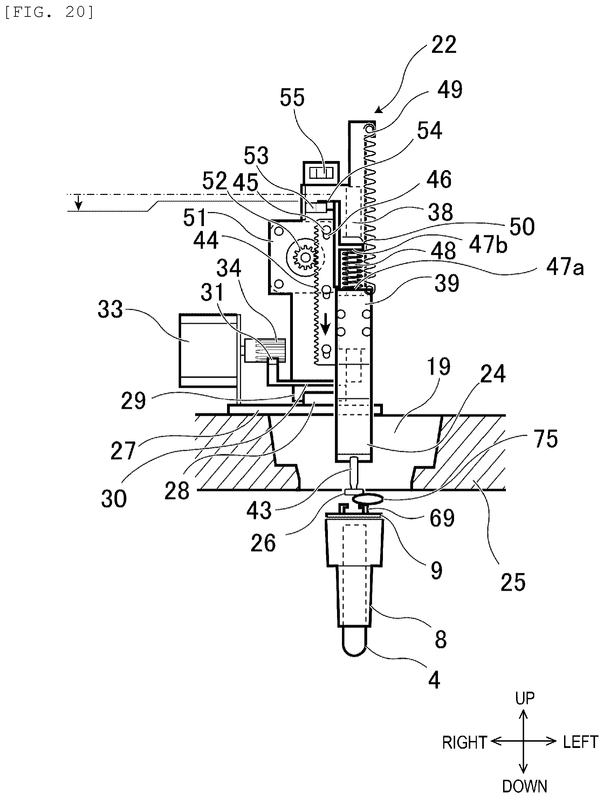

FIG. 20 is a cross-sectional view taken along line D-D showing an operation of detecting an abnormal descent when the hook portion 26 does not descend by a predetermined amount due to contact with a foreign matter or the like during the descent.

During a descent operation of the hook portion 26 shown in FIG. 20, when a foreign matter 75 is caught between the hook portion 26 and the hook receiving portion 69 of the lid body 9, the descent of the hook portion 26 and the opening and closing arm 24 is hindered.

Meanwhile, since the Z motor 51 continues to be rotationally driven and the Z rack 44 is supported to be movable downward by a predetermined amount with respect to the opening and closing arm 24 via the slide pin 45 and the pin receiving hole 46, the Z rack 44 descends relative to the opening and closing arm 24 via the Z pinion 52 to compress the compression spring 48. Since the abnormal descent detection plate 54 descends together with the Z rack 44, occurrence of the abnormal descent can be detected by shielding the transmitted light of the abnormal descent detection sensor 53 provided in the opening and closing arm 24.

With such a configuration, when the hook portion 26 does not descend to a predetermined height due to the influence of the foreign matter 75 or the like, the control device 6 can detect that the hook portion 26 abnormally descends, stop the descent operation and raise the hook portion 26, or notify the operator of the occurrence of the abnormality by display on an operation panel, an indicator lamp, or a notification sound.

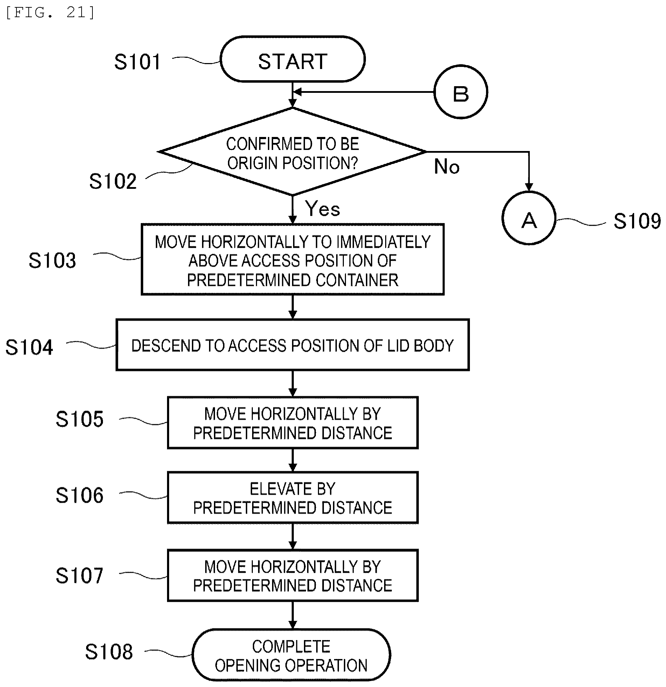

Operation processing of the lid opening and closing device 22 performed by the control device 6 will be described with reference to FIGS. 21 to 23.

First, the flow of the opening operation of the lid body 9 by the lid opening and closing device 22 will be described with reference to FIG. 21. FIG. 21 is a flowchart showing the opening operation of the lid body 9 by the lid opening and closing device 22.

When the lid opening and closing device 22 is operated to open the lid body 9 of the container case 8, the following processing is performed.

In step S101, when the operator turns on the power supply and activates the automatic analyzer, the processing is started.

In step S102, the control device 6 confirms the states of the X origin sensor 35 and the Z origin sensor 55. When both the X origin sensor 35 and the Z origin sensor 55 are in the light shielding (OFF) state (Yes), it is determined that the sensors are at the original position, and the processing proceeds to step S103.

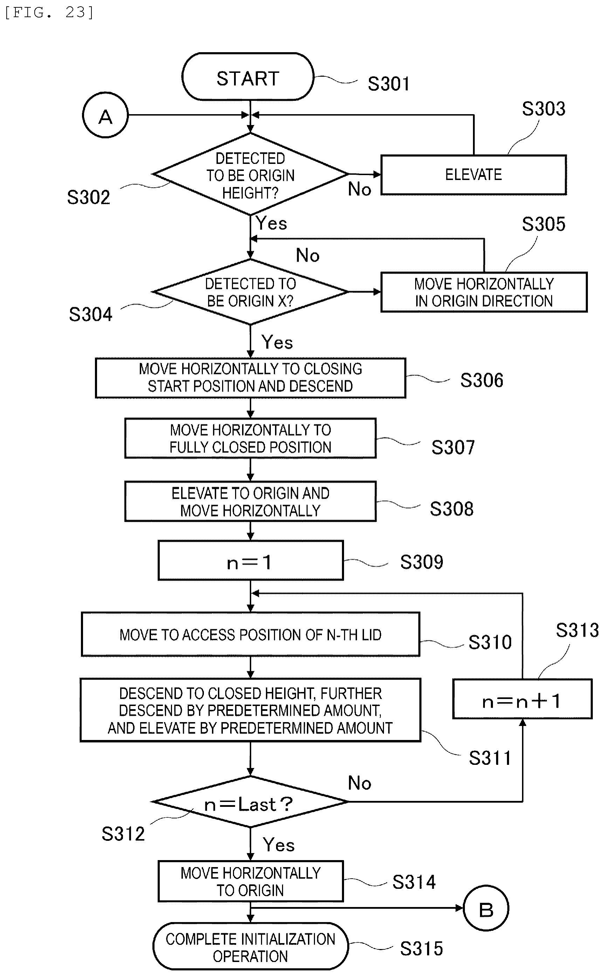

When either the X origin sensor 35 or the Z origin sensor 55 is in the light transmitting (ON) state (NO), the processing proceeds to (A) of the initialization operation flowchart shown in FIG. 23 as step S109.

In step S103, the control device 6 drives the X motor 33 by a predetermined number of steps to move the hook portion 26 rearward to directly above the access position of the lid body 9 where the lid body 9 is to be opened, and stops the X motor 33.

Thereafter, in step S104, the control device 6 drives the Z motor 51 by a predetermined number of steps to descend the hook portion 26 until the hook portion 26 comes into contact with the upper surface of the lid body 9, and then stops the Z motor 51. The hook portion 26 is at the access position.

In step S105, the control device 6 drives the X motor 33 forward by a predetermined number of steps, inserts the hook portion 26 into the hook receiving portion 69 provided on the upper surface of the lid body 9, and stops the X motor 33.

Further, in step S106, the control device 6 drives the Z motor 51 by a predetermined number of steps to raise the hook portion 26 by a predetermined distance, and then stops the Z motor 51. By the operation, the lid body 9 is opened by, for example, about 30° to 45°.

Thereafter, in step S107, the control device 6 drives the X motor 33 by a predetermined number of steps to move the hook portion 26 forward to, for example, a fully open position where the lid body 9 is opened by 105°, and then stops the X motor 33.

Finally, in step S108, the opening operation of the lid body 9 is completed by the above operation, and the lid body 9 is in the fully open position.

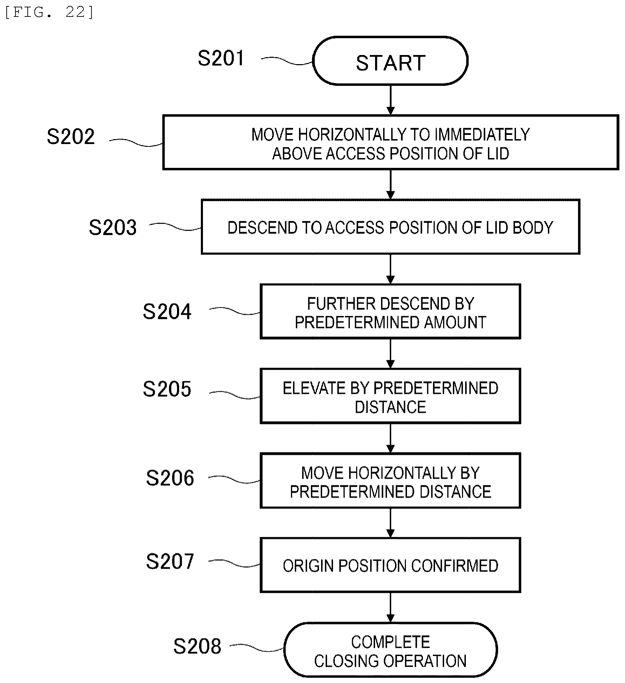

Next, the flow of the closing operation will be described with reference to FIG. 22. FIG. 22 is a flowchart showing the closing operation of the lid body 9 by the lid opening and closing device 22.

In step S201, the control device 6 confirms that the take-out of the QC specimen container 4 by the container gripping device 21 is completed, and starts the processing of the closing operation of the lid body 9.

Next, in step S202, the control device 6 drives the X motor 33 to move the hook portion 26 rearward by a predetermined number of steps to move the hook portion 26 directly above the access position of the lid body 9.

Further, in step S203, the control device 6 drives the Z motor 51 by a predetermined number of steps to descend the hook portion 26 until the hook portion 26 comes into contact with the upper surface of the lid body 9. The hook portion 26 is at the access position.

In step S204, the control device 6 further drives the Z motor 51 in the direction of descending the hook portion 26 by a predetermined number of steps to descend the opening and closing arm 24, thereby compressing the pressing spring 62 and applying a predetermined closing force from the hook portion 26 to an access portion of the lid body 9.

Thereafter, in step S205, the control device 6 drives the Z motor 51 by a predetermined number of steps to raise the hook portion 26 by a predetermined distance, and then stops the Z motor 51. At this time, since the hook portion 26 raises to the origin height, the Z origin sensor 55 changes from light transmitting (ON) state to the light shielding (OFF) state.

In step S206, the control device 6 drives the X motor 33 to move the hook portion 26 forward, and stops when the X origin sensor 35 changes from the light transmitting (ON) state to the light shielding (OFF) state.

Finally, in step S207, when it is confirmed that both the X origin sensor 35 and the Z origin sensor 55 are in the light shielding (OFF) state, the hook portion 26 is at the original position, and thus the closing operation of the lid body 9 is completed.

Next, the flow of the initialization operation will be described with reference to FIG. 23. FIG. 23 is a flowchart showing the initialization operation of the lid opening and closing device 22.

In step S301, the control device 6 starts an initialization operation that is performed when either the X origin sensor 35 or the Z origin sensor 55 is in the light transmitting (ON) state and the hook portion 26 is not at the original position in step S102 after the power supply is turned on.

In step S302, the control device 6 determines whether the Z origin sensor 55 is in the light shielding (OFF) state and the hook portion 26 is at the origin height, and if the Z origin sensor 55 is in the light shielding (OFF) state (Yes), the hook portion 26 is at the origin height, and thus the processing proceeds to step S304. When the Z origin sensor 55 is in the light transmitting (ON) state (NO), it is determined that the hook portion 26 descends from the origin height, and the processing proceeds to step S303.

Next, in step S303, the control device 6 drives the Z motor 51 to raise the hook portion 26, and stops the Z motor 51 when the Z origin sensor 55 changes from the light transmitting (ON) state to the light shielding (OFF) state. The hook portion 26 has an origin height.

Further, in step S304, the control device 6 determines whether the X origin sensor 35 is in the light shielding (OFF) state and the hook portion 26 is at the original position, and if the X origin sensor 35 is in the light shielding (OFF) state (Yes), the hook portion 26 is at the original position, and thus the processing proceeds to step S306. When the X origin sensor 35 is in the light transmitting (ON) state (NO), the hook portion 26 is at a position moved rearward from the original position, and thus the processing proceeds to step S305.

Next, in step S305, the control device 6 drives the X motor 33 to move the hook portion 26 forward.

In step S306, the control device 6 drives the X motor 33 to move the hook portion 26 rearward by a predetermined number of steps, and disposes the hook portion 26 directly above the region 73 (access position) described with reference to (m) of FIG. 17. Further, the Z motor 51 is driven by a predetermined number of steps to descend the hook portion 26 until the hook portion 26 comes into contact with the region 73.

In step S307, the control device 6 drives the X motor 33 to move the hook portion 26 rearward by a predetermined number of steps, and moves the hook portion 26 to the vicinity of the tip of the rearmost lid body 9 as shown in (n) of FIG. 18.

In step S308, the control device 6 drives the Z motor 51 by a predetermined number of steps to raise the hook portion 26 by a predetermined distance, and then stops the Z motor 51. At this time, since the hook portion 26 raises to the origin height, the Z origin sensor 55 changes from light transmitting (ON) state to the light shielding (OFF) state.

Further, the X motor 33 is driven to move the hook portion 26 forward, and the hook portion 26 stops when the X origin sensor 35 changes from the light transmitting (ON) state to the light shielding (OFF) state.

In step S309, n = 1 is set as an initial value of an operation repeating number n equal to the number of the plurality of lid bodies 9 in the shutter opening 19. n = 1 corresponds to the foremost lid body 9 and sequentially corresponds to the rear lid bodies 9. In the present embodiment, the maximum value of n is n = 3.

In step S310, the control device 6 drives the X motor 33 to move the hook portion 26 to a position directly above the access position of the n-th lid body 9.

In step S311, the control device 6 drives the Z motor 51 by a predetermined number of steps to descend the hook portion 26 until the hook portion 26 comes into contact with the region 73. By further descending the opening and closing arm 24, the pressing spring 62 is compressed, and a predetermined closing force is applied from the hook portion 26 to the access portion of the lid body 9 to close the lid body 9. Thereafter, the Z motor 51 is driven in a reverse direction by a predetermined number of steps to raise the hook portion 26 to the origin height.

In step S312, it is determined whether the operation repeating number n is the maximum value (Last). If it is the maximum value (Yes), since the closing operation of all the lid bodies 9 is completed, the processing proceeds to step S314.

When the operation repeating number n is not the maximum value (NO), the processing proceeds to step S313.

In step S313, 1 is added to the operation repeating number n, and the processing after step S310 is executed.

In step S314, the control device 6 drives the X motor 33 to move the hook portion 26 forward, and stops when the X origin sensor 35 changes from the light transmitting (ON) state to the light shielding (OFF) state. When the opening operation of the lid body 9 is continued, the processing moves to (b) of FIG. 21, and the processing after step S102 is performed.

Finally, in step S315, the hook portion 26 is at the original position, and the initialization operation is completed.

The control device 6 can execute the opening operation, the closing operation, and the initialization operation of the lid body 9 by causing the lid opening and closing device 22 to perform the above-described operation.

The horizontal operation and the up and down operation of the lid opening and closing device 22 in the present example may be performed in a form in which an operation amount is monitored by a sensor or the like in an opening direction, a closing direction, and an operation at the time of initialization, but it is desirable that a specified operation amount is determined in advance and the lid opening and closing device 22 is operated by the determined specified operation amount from the viewpoint of downsizing of the device and simplification of the configuration.

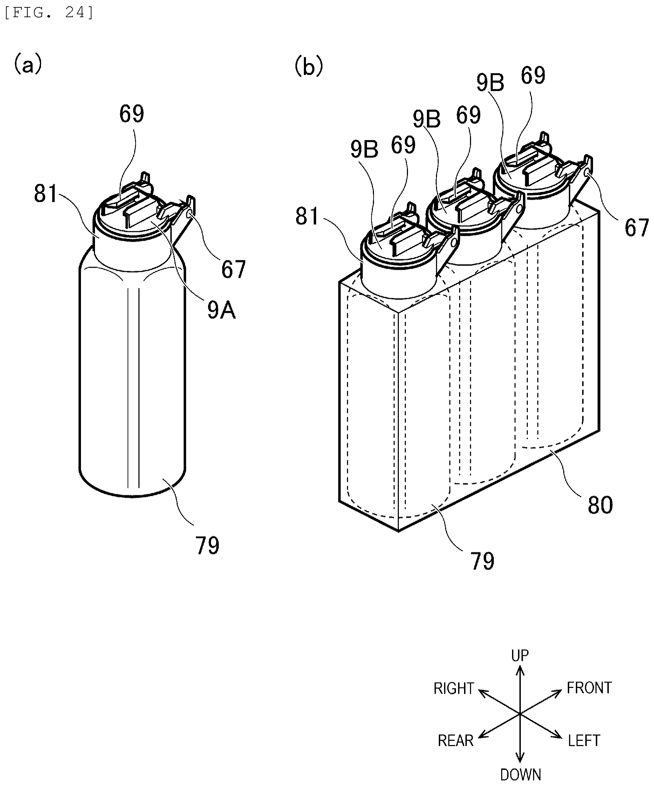

FIG. 24 is a perspective view showing an embodiment of a reagent bottle 80 in which a reagent container 79 provided with an openable and closable lid body or a plurality of reagent containers 79 are contained in one case instead of a container case.

The reagent container 79 shown in (a) of FIG. 24 and the reagent bottle 80 shown in (b) of FIG. 24 are provided with a neck 81 having an opening in the upper surface, and the lid body support shaft 67 for supporting the lid bodies 9A and 9B in an openable and closable manner in a portion of the neck 81, and the configuration of the lid bodies 9A and 9B is the same as the configuration described with reference to FIGS. 9 and 10.

Next, effects of the present embodiment will be described.

The lid opening and closing device 22 according to the first embodiment of the above-described invention includes: the opening and closing portion configured to open and close the lid body 9 of the container case 8 having an accommodating portion that accommodates the QC specimen container 4 that accommodates a liquid and an openable and closable lid body 9 that is attached to an upper surface of the accommodating portion via the lid body support shaft 67. The opening and closing portion includes the opening and closing arm 24 having the hook portion 26 configured to be accessible to the lid body 9, the lid body 9 has, on an upper surface thereof, a groove capable of receiving the hook portion 26 of the opening and closing arm 24 and having the hook receiving portion 69 forming a path through which the hook portion 26 is movable, and a relationship between a first position of the hook portion 26 at which the hook receiving portion 69 receives the hook portion 26 in a state in which the lid body 9 is closed and a second position of the hook portion 26 when the hook portion 26 is engaged with the hook receiving portion 69 to open the lid body 9 is such that the second position is higher than the first position in a vertical direction and positions in the vertical direction with respect to a horizontal plane of an opening portion are different.

Accordingly, since the lid body 9 can be opened and closed by combining the horizontal movement and the up and down operation of the hook portion 26 that is engaged with the lid body 9 to open and close the lid body 9, there is an effect that the lid body 9 provided in the container case 8 stored inside the container storage device 1 can be reliably opened and closed.

The lid opening and closing device 22 according to the first embodiment of the above-described invention includes: an opening and closing portion configured to open and close the lid body 9 of the container case 8 having an accommodating portion that accommodates the QC specimen container 4 that accommodates a liquid and an openable and closable lid body 9 that is attached to an upper surface of the accommodating portion via the lid body support shaft 67; and the control device 6 configured to control an operation of the opening and closing portion. The opening and closing portion includes the opening and closing arm 24 having the hook portion 26 configured to be accessible to the lid body 9, the lid body 9 has, on an upper surface thereof, a groove capable of receiving the hook portion 26 of the opening and closing arm 24 and having a hook receiving portion 69 forming a path through which the hook portion 26 is movable, and the control device 6 controls the operation of the opening and closing portion to cause the hook portion 26 to access the hook receiving portion 69, horizontally move the path toward the lid body support shaft 67 to engage the hook portion 26 with the hook receiving portion 69, and move the opening and closing arm 24 upward to open the lid body 9 in the engaged state.

According to such a lid opening and closing device 22, by matching an opening and closing direction of the lid body 9 with a drum radial direction of the cylindrical container storage 7, the horizontal operation required for the opening and closing operation of the lid body 9 and the selection operation of the inner and outer peripheral container cases of the container case 8 concentrically arranged in the container storage 7 can be performed in the same direction (X direction), and the configuration can be simplified by enabling a series of operations only by biaxial driving in the X-axis direction and the Z-axis direction.

Since the opening and closing arm 24 has the support rod portion 43 extending in the longitudinal direction, and the hook portion 26 is formed on one end side in the longitudinal direction of the support rod portion 43 to be enlarged in a transverse direction of the support rod portion 43, the shapes of the lower end portion 42 of the opening and closing arm 24 and the support rod portion 43 of the hook portion 26 can be formed along the inclination of a drum opening portion, so that it is possible to avoid interference with a container gripping mechanism (gripper) when the lid is opened.

Further, since the hook portion 26 is implemented to form an inverted T shape together with the support rod portion 43, the hook portion 26 is formed in an inverted T shape, and the hook receiving portion 69 corresponding to the shape of the hook portion 26 is provided on the upper surface of the lid body 9, so that an effect of ensuring reliable engagement between the lever and the receiving groove is obtained.

In addition, since the support rod portion 43 is inclined at a predetermined angle in the fully open direction of the lid body 9 with respect to the perpendicular line of the upper surface of the lid body 9, there is an effect that the maximum opening angle of the lid body 9 is larger than 90° and the opening of the upper surface of the container case 8 can be sufficiently opened.

Further, the support rod portion 43 is supported to be movable in a predetermined range in the longitudinal direction thereof via the pressing spring 62, and the hook portion 26 closes the lid body 9 by the biasing force generated by deforming the pressing spring 62 when the lid body 9 is pressed from above and closed, thereby stabilizing the closing force of the lid body 9 during the closing operation and ensuring the closing operation of the lid body 9.

In addition, after the lid body 9 is opened, the hook portion 26 is further horizontally moved in the same direction as the direction in which the hook portion 26 and the hook receiving portion 69 are engaged with each other, so that the lid body 9 can be moved in the opening direction, and the opening operation can be more reliably performed.

Further, in the state in which the hook portion 26 and the hook receiving portion 69 are engaged, the control device 6 controls the operation of the opening and closing portion to move the opening and closing arm 24 horizontally along a path in a direction separated from the lid body support shaft 67, and to move the opening and closing arm 24 downward to press against the upper surface of the lid body 9, thereby closing the lid body 9. When the lid body 9 is closed, the hook portion 26 presses the upper surface of the lid body 9 vertically downward from directly above, so that the closing operation of the lid body 9 is reliable, and since no force in the horizontal direction is applied to the lid body support shaft 67 which serves as a hinge, no bending moment is generated in an inclined direction on the container case 8 during the closing operation, and the container case 8 is held stably. Further, by descending the hook portion 26 to press against the tip portion of the lid body 9, the lid can be reliably closed.

In addition, the control device 6 moves the hook portion 26 to the third position located closer to the opening and closing portion than the upper surface of the lid body 9 when the lid body 9 closest to the opening and closing portion among the plurality of lid bodies 9 is fully opened, horizontally moves the hook portion 26 from the third position to immediately above the first position of the lid body 9 farthest from the opening and closing portion among the plurality of lid bodies 9, and controls the operation of the opening and closing portion to sequentially press the plurality of lid bodies 9 from above to close all of the lid bodies 9, so that it is possible to perform the initialization operation of returning to the original position even from a state in which the operation is stopped at a position other than the origin in the middle of a series of normal operations due to a power failure during the operation, an emergency stop operation by an operator, or the like. Therefore, even when any of the lid bodies 9 is in the open state, all of the lid bodies 9 can be reliably returned to the closed state and to the original position, and the next series of normal operations can be started.

### <Second Embodiment>

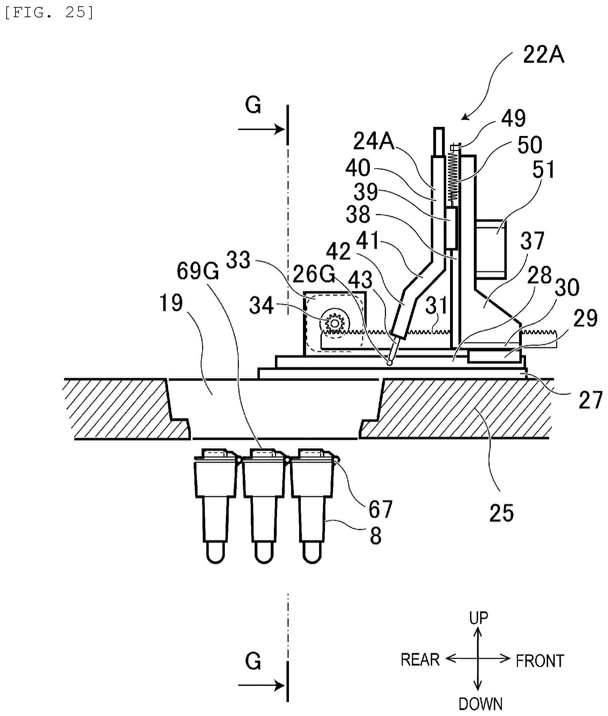

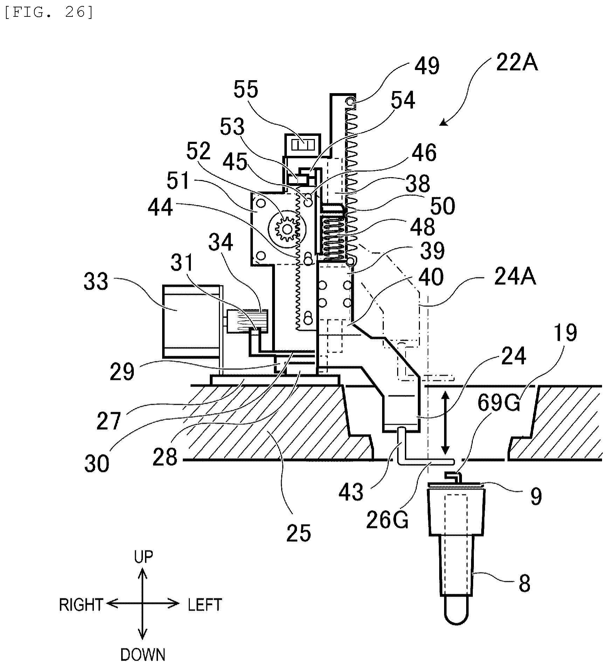

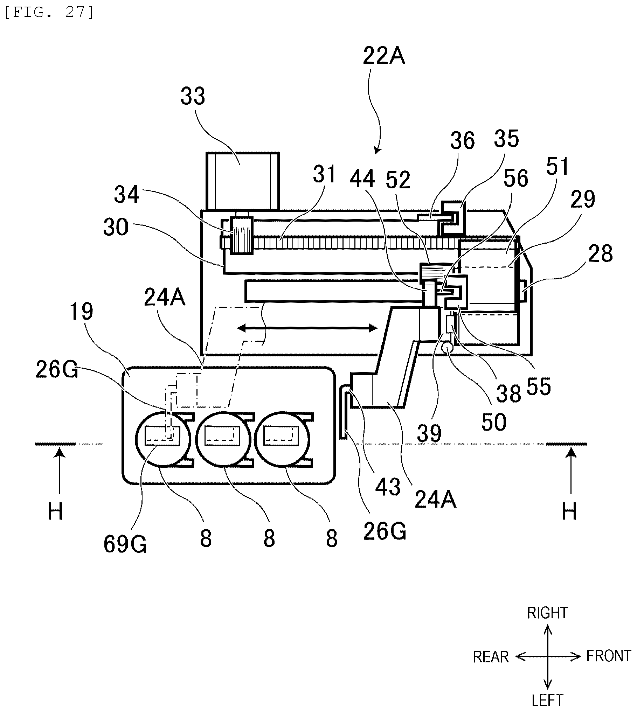

A lid opening and closing device, a container storage device, an automatic analyzer, and a lid opening and closing method according to a second embodiment of the invention will be described with reference to FIGS. 25 to 27. FIG. 25 shows configurations of the lid opening and closing device and the container storage according to the second embodiment, and is a diagram showing an H-H cross section of FIG. 27, FIG. 26 is a diagram showing a G-G cross section of FIG. 25, and FIG. 27 is a plan view of the lid opening and closing device and the container storage.

Unlike the lid opening and closing device 22 in the first embodiment, a lid opening and closing device 22A in the present example shown in FIGS. 25 to 27 is provided not on an inner peripheral side of the shutter opening 19 of the container storage 7 but on a side of the shutter opening 19 in a circumferential direction.

Specifically, the lid opening and closing device 22A is provided on the side of the shutter opening 19. Therefore, a shape of an opening and closing arm 24A is bent in a plan view, and can act on the lid body 9 of the container case 8 disposed in the shutter opening 19 located on the side.

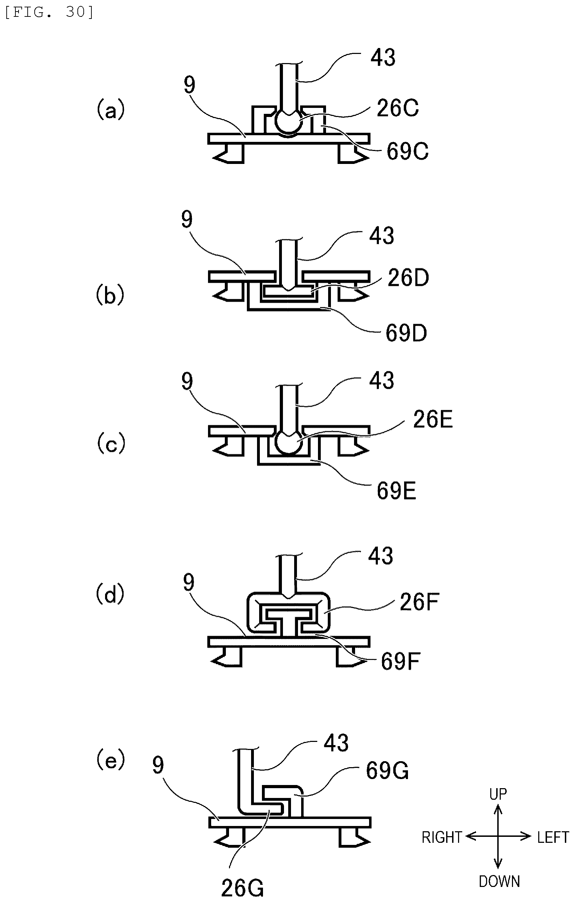

A hook portion 26G of the support rod portion 43 and a hook receiving portion 69G of the lid body 9 have a substantially L shape similar to that of (e) of FIG. 30 described in a fourth embodiment described later. The hook portion 26G of the support rod portion 43 and the hook receiving portion 69G of the lid body 9 may have any of the configurations described in the first embodiment and the configurations described in the fourth embodiment described later.

Since other configurations and operations are the same as those of the first embodiment, the same configurations or configurations having the same functions are denoted by the same reference numerals, and detailed description thereof will be omitted.

Other configurations and operations are substantially the same as those of the lid opening and closing device, the container storage device, the automatic analyzer, and the lid opening and closing method according to the first embodiment described above, and details thereof will be omitted.

Also in the lid opening and closing device, the container storage device, the automatic analyzer, and the lid opening and closing method according to the second embodiment of the invention, substantially the same effects as those of the lid opening and closing device, the container storage device, the automatic analyzer, and the lid opening and closing method according to the first embodiment described above can be obtained.

Further, in the present embodiment, the container case 8 and the opening and closing arm 24 may be arranged side by side in the left and right direction without overlapping each other when viewed in a plan view, and in such a form, a gap is easily provided between the container gripping device 21 and the opening and closing arm 24, which is preferable.

### <Third Embodiment>

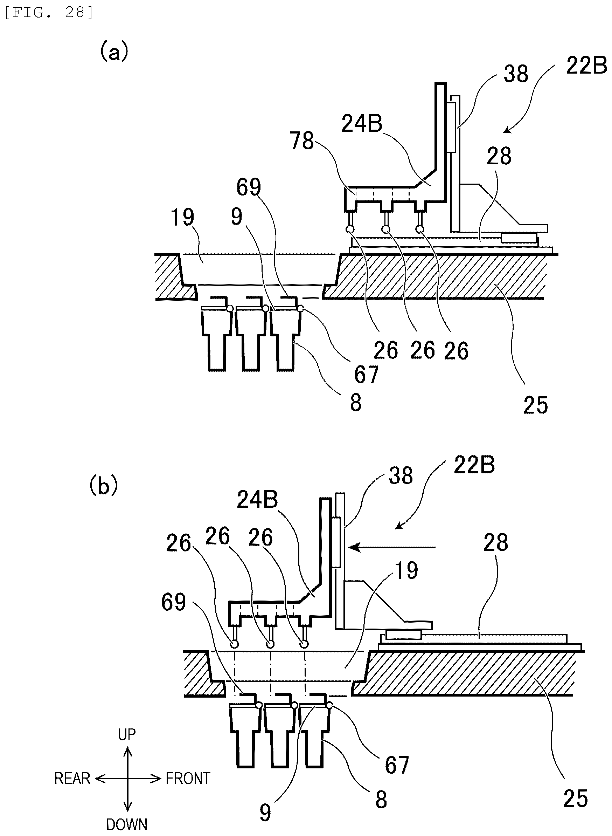

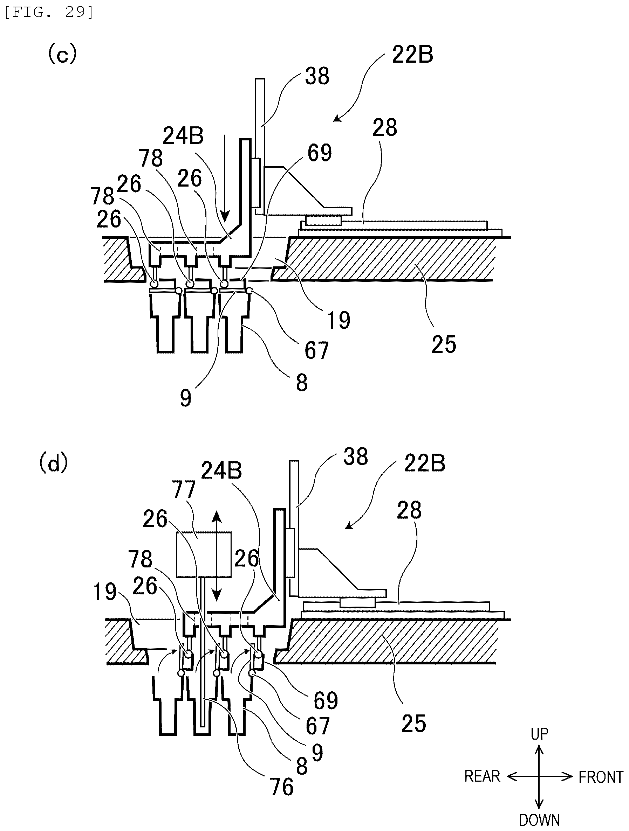

A lid opening and closing device, a container storage device, an automatic analyzer, and a lid opening and closing method according to a third embodiment of the invention will be described with reference to FIGS. 28 and 29. FIG. 28 is a diagram corresponding to a C-C cross-sectional view in the configuration of the lid opening and closing device and the container storage according to the third embodiment, and FIG. 29 is a C-C cross-sectional view in the configuration of the lid opening and closing device and the container storage according to the third embodiment.

In a lid opening and closing device 22B according to the present embodiment shown in FIGS. 28 and 29, a plurality of hook portions 26 are provided in series on one opening and closing arm 24B, and the lid bodies 9 of a plurality of container cases 8 arranged in series are simultaneously opened and closed. A driving system such as a motor and a rack and pinion and detection sensors are not illustrated.

The third embodiment is different from the first embodiment in that a lower end portion of the opening and closing arm 24B extends horizontally rearward, and three hook portions 26 are provided to match an arrangement interval of the container cases 8 in a storage container via a plurality of support rod portions extending downward from the opening and closing arm 24B.

A dispensing opening 78 is provided immediately above each of the container cases 8 on the opening and closing arm 24 so that, when the lid body 9 is fully opened, a dispensing nozzle 76 extending vertically downward from a dispensing arm 77 can enter the inside of each of the container cases 8.

(a) of FIG. 28 shows an original position, and the three hook portions 26 are located above the X rail and located outside the shutter opening 19 in a plan view. This state corresponds to the original position shown in (a) of FIG. 12.

(b) of FIG. 28 shows a state in which the opening and closing arm 24B is horizontally moved backward and the plurality of hook portions 26 are positioned immediately above the vicinity of the tip portions of the corresponding lid bodies 9. This state corresponds to the state of (b) of FIG. 12.

(c) of FIG. 29 shows a state in which the opening and closing arm 24 descends vertically downward and the plurality of hook portions 26 are positioned in the vicinity of the tip portions of the upper surfaces of the corresponding lid bodies 9. This state corresponds to the state of (c) of FIG. 13.

(d) of FIG. 29 shows a state in which the opening and closing arm 24 is moved forward by a predetermined amount, then moved upward by a predetermined amount, and then moved forward by a predetermined amount to fully open the plurality of lid bodies 9. This state corresponds to (f) of FIG. 14.

Here, in (d) of FIG. 29, since the adjacent lid bodies 9 are close to each other, when the lid body 9 is opened by 90° or more, the opening of the adjacent container case 8 is partially blocked, and thus the opening angle is set to 90°.

Here, since the opening and closing arm 24B is provided with the dispensing opening 78 immediately above the container case 8, the thin dispensing nozzle 76 can be inserted into the container case 8 from above.

On the other hand, if the interval between the lid bodies 9 is widened so that the lid bodies open, for example, 105° without blocking the opening on the upper surface of the adjacent container case 8, the gripping claws 21a of the container gripping device 21 can be inserted into the inside of the container case 8 to take out and insert the QC specimen container 4 from the container case 8.

Other configurations and operations are substantially the same as those of the lid opening and closing device, the container storage device, the automatic analyzer, and the lid opening and closing method according to the first embodiment described above, and details thereof will be omitted.

### <Fourth Embodiment>

A lid opening and closing device, a container storage device, an automatic analyzer, and a lid opening and closing method according to the fourth embodiment of the invention will be described with reference to FIG. 30. FIG. 30 is a diagram showing various modifications of the hook portion in the lid opening and closing device according to the fourth embodiment.

In the present embodiment, a plurality of different shapes of the hook portion 26 and the hook receiving portion 69 will be described. Configurations other than the hook portion 26 and the hook receiving portion 69 are the same as those of any embodiment of the first embodiment to third embodiment, and a description thereof will be omitted.

In (a) of FIG. 30, a hook portion 26C is not in an inverted T shape, but is a sphere having a diameter larger than that of the cylinder of the support rod portion 43, and a hook receiving portion 69C has a concave portion in which the sphere is movable in the front and rear direction. An upper surface of the hook receiving portion 69C has a groove having a width smaller than a diameter of the sphere and allowing the support rod portion 43 to move in the front and rear direction.

In (b) of FIG. 30, although the hook portion 26D has an inverted T shape as in the first embodiment, a hook receiving portion 69D does not have a shape protruding from the upper surface of the lid body 9, but has a shape in which a movable groove of the support rod portion 43 is provided on the upper surface of the lid body 9 and the hook receiving portion 69D protrudes from the lower surface of the lid body 9.

In (c) of FIG. 30, a hook portion 26E is a sphere having a diameter larger than that of the cylinder of the support rod portion 43 as in (a) of FIG. 30, and a hook receiving portion 69E has a concave portion in which the sphere is movable in the front and rear direction. The hook receiving portion 69E does not have a shape protruding from the upper surface of the lid body 9, but has a shape in which a movable groove of the support rod portion 43 is provided on the upper surface of the lid body 9 and the hook receiving portion 69E protrudes from the lower surface of the lid body 9.

In (d) of FIG. 30, a hook receiving portion 69F has a T shape protruding from the upper surface of the lid body, a hook portion 26F has a rectangular shape surrounding the hook receiving portion 69F, an upper side of the hook portion 26F is connected to the support rod portion 43, and a lowermost side is provided with a gap so as not to interfere with the hook receiving portion 69F.

In (e) of FIG. 30, a hook portion 26G has a substantially L shape extending only in one direction with respect to the support rod portion 43, a hook receiving portion 69G has an inverted L shape protruding from the upper surface of the lid body, and a leftward extending portion of the hook portion 26G is inserted between a rightward extending portion of the hook receiving portion 69G and the upper surface of the lid body 9, so that the hook portion 26G is provided to be movable in the front and rear direction.

Further, in the embodiment shown in (e) of FIG. 30, in the hook portion 26G having an inverted T shape, the hook portion 26G does not necessarily have to be bilaterally symmetrical with respect to the support rod portion 43, and may have a shape in which an amount of protrusion to the left is different from an amount of protrusion to the right.

In the embodiment described above, the hook portion is described as a cylindrical shape or a spherical shape, and the invention is not limited to such a form, and the hook portion 26 may be provided with a pivot member that is pivotable with respect to a cylindrical axis of the hook portion.

Other configurations and operations are substantially the same as those of the lid opening and closing device, the container storage device, the automatic analyzer, and the lid opening and closing method of any one of the first embodiment, the second embodiment, and the third embodiment described above, and details thereof will be omitted.

In the lid opening and closing device, the container storage device, the automatic analyzer, and the lid opening and closing method according to the fourth embodiment of the invention, substantially the same effects as those of the lid opening and closing device, the container storage device, the automatic analyzer, and the lid opening and closing method of any of the first embodiment, the second embodiment, and the third embodiment described above can be obtained.

### <Others>

The invention is not limited to the embodiments described above and includes various modifications. The embodiments described above have been described in detail to describe the invention in an easy-to-understand manner, and the invention is not necessarily limited to those including all configurations described above.

A part of a configuration according to a certain embodiment can also be replaced with a configuration according to another embodiment, and a configuration according to another embodiment can be added to a configuration according to a certain embodiment. A part of a configuration according to each embodiment may be added to, deleted from, or replaced with another configuration.

The invention includes the following technical idea as shown in FIG. 24.

A container includes: an opening portion on an upper surface; and an openable and closable lid body attached to the upper surface via a hinge,
an upper surface of the lid body is formed with a groove capable of receiving a convex portion of an opening and closing mechanism for accessing the lid body from outside and having a concave portion constituting a path through which the convex portion is movable, and
a first position of the convex portion at which the concave portion receives the convex portion in a state in which the lid body is closed and a second position of the convex portion when the convex portion is engaged with the concave portion to open the lid body are located at different positions in a vertical direction with respect to a horizontal plane of the opening portion, the second position being higher than the first position.

### Reference Signs List

1: container storage device
2: automatic analyzer
3: analyzer
4: QC specimen container
5: pretreatment device
6: control device (control unit)
7: container storage
8: container case
9, 9A, 9B: lid body
10: first conveyance path
11: circular ring holder
12: storage center shaft
13: housing
14: heat insulating member
15: disk support shaft
16: disk
17: disk drive shaft
18a: outer circumference circle
18b: intermediate circumference circle
18c: inner circumference circle
19: shutter opening
20: shutter
21: container gripping device
21a: gripping claw
21b: gripping claw drive unit
22, 22A, 22B: lid opening and closing device
23: second conveyance path
24, 24A, 24B: opening and closing arm (lever)
25: drum upper lid
26, 26C, 26D, 26E, 26F, 26G: hook portion (convex portion)
27: base
28: X rail
29: X slider
30: slide base
31: X rack
32: mounting bracket
33: X motor
34: X pinion
35: X origin sensor
36: X origin detection plate
37: angle
38: Z rail
39: Z slider
40: fixing portion
41: bending portion
42: lower end portion
43: support rod portion
44: Z rack
45: slide pin
46: pin receiving hole
47a: spring seat
47b: spring seat
48: compression spring
49: spring hooking portion
50: tension spring
51: Z motor
52: Z pinion
53: abnormal descent detection sensor
54: abnormal descent detection plate
55: Z origin sensor
56: origin height detection plate
57: support rod base
58: pin
59: guide portion
60: guide member
61: stepped portion
62: pressing spring (elastic member)
63: elongated hole
64: first cylindrical portion
65: second cylindrical portion
66: sealing member
67: lid body support shaft (hinge)
68: sealing material
69, 69C, 69D, 69E, 69F, 69G: hook receiving portion (concave portion)
70: hook receiving portion end surface
71: groove
72: lid groove upper surface
73: region (access position)
74: region (initialization operation)
75: foreign matter
76: dispensing nozzle
77: dispensing arm
78: dispensing opening
79: reagent container
80: reagent bottle
81: neck
82: shutter opening end
83: stepped portion
84: movement amount

## Claims

1. A lid opening and closing device comprising:
an opening and closing portion configured to open and close a lid body of a case having an accommodating portion that accommodates a container that accommodates a liquid and an openable and closable lid body that is attached to an upper surface of the accommodating portion via a hinge, wherein
the opening and closing portion includes a lever having a convex portion configured to be accessible to the lid body,
the lid body has, on an upper surface thereof, a groove capable of receiving the convex portion of the lever and having a concave portion forming a path through which the convex portion is movable, and
a relationship between a first position of the convex portion at which the concave portion receives the convex portion in a state in which the lid body is closed and a second position of the convex portion when the convex portion is engaged with the concave portion to open the lid body is such that the second position is higher than the first position in a vertical direction and positions in the vertical direction with respect to a horizontal plane of an opening portion are different.

2. The lid opening and closing device according to claim 1, wherein
the lever has a support rod portion extending in a longitudinal direction, and
the convex portion is formed on one end side of the support rod portion in the longitudinal direction to expand in a transverse direction of the support rod portion.

3. The lid opening and closing device according to claim 2, wherein
the convex portion forms an inverted T shape together with the support rod portion.

4. The lid opening and closing device according to claim 3, wherein
the support rod portion is inclined at a predetermined angle in a fully open direction of the lid body with respect to a perpendicular line of the upper surface of the lid body.

5. The lid opening and closing device according to claim 4, wherein
the support rod portion is supported via an elastic member to be movable within a predetermined range in the longitudinal direction of the support rod portion, and
the convex portion closes the lid body by a biasing force generated by deforming the elastic member when the lid body is pressed from above and closed.

6. A lid opening and closing device comprising:
an opening and closing portion configured to open and close a lid body of a case having an accommodating portion that accommodates a container that accommodates a liquid and an openable and closable lid body that is attached to an upper surface of the accommodating portion via a hinge; and
a control unit configured to control an operation of the opening and closing portion, wherein
the opening and closing portion includes a lever having a convex portion configured to be accessible to the lid body,
the lid body has, on an upper surface thereof, a groove capable of receiving the convex portion of the lever and having a concave portion forming a path through which the convex portion is movable, and
the control unit controls the operation of the opening and closing portion to
cause the convex portion to access the concave portion,
horizontally move the convex portion along the path toward the hinge to engage with the concave portion, and
move the lever upward to open the lid body in the engaged state.

7. The lid opening and closing device according to claim 6, wherein
after the lid body is opened, the convex portion is further horizontally moved in a direction same as a direction in which the convex portion and the concave portion are engaged with each other.

8. The lid opening and closing device according to claim 6, wherein
the control unit controls the operation of the opening and closing portion to
in a state in which the convex portion and the concave portion are engaged with each other, horizontally move the path such that the lever is separated from the hinge, and
move the lever downward to press the upper surface of the lid body to close the lid body.

9. The lid opening and closing device according to claim 6, wherein
the control unit controls the operation of the opening and closing portion to
move the convex portion to a third position closer to the opening and closing portion than the upper surface of the lid body when the lid body closest to the opening and closing portion among a plurality of lid bodies is fully opened,
horizontally move the convex portion from the third position to a position immediately above a first position of the lid body farthest from the opening and closing portion among the plurality of lid bodies, and
sequentially press the plurality of lid bodies from above to close all of the lid bodies.

10. A container storage device comprising:
the lid opening and closing device according to claim 1.

11. An automatic analyzer comprising:
the container storage device according to claim 10.

12. A lid opening and closing method for a case having an accommodating portion that accommodates a container that accommodates a liquid and an openable and closable lid body that is attached to an upper surface of the accommodating portion via a hinge,
the lid body having, on an upper surface thereof, a groove capable of receiving the convex portion of a lever and having a concave portion forming a path through which the convex portion is movable, and
an opening and closing portion including the lever having the convex portion configured to be accessible to the lid body,
the lid opening and closing method comprising:
controlling the opening and closing portion to
cause the convex portion to access the concave portion,
horizontally move the convex portion along the path toward the hinge to engage with the concave portion, and
move the lever upward to open the lid body in the engaged state.

13. The lid opening and closing method according to claim 12, wherein
after the lid body is opened, the convex portion is further horizontally moved in a direction same as a direction in which the convex portion and the concave portion are engaged.

14. The lid opening and closing method according to claim 12, wherein
in a state in which the convex portion and the concave portion are engaged with each other, the path is horizontally moved such that the lever is separated from the hinge, and
the lever is moved downward to press the upper surface of the lid body to close the lid body.

15. The lid opening and closing method according to claim 12, wherein
the convex portion is moved to a third position closer to the opening and closing portion than the upper surface of the lid body when the lid body closest to the opening and closing portion among a plurality of lid bodies is fully opened,
the convex portion is horizontally moved from the third position to a position immediately above a first position of the lid body farthest from the opening and closing portion among the plurality of lid bodies, and
the plurality of lid bodies are sequentially pressed from above to close all of the lid bodies.
